# EUROPEAN PATENT APPLICATION

(11) **EP 4 845 243 A1**
(43) Date of publication of application: **25.11.2026**
(21) Application number: 25760739.0
(22) Date of filing: 08.02.2025
(51) Int. Cl.: H04W 52/02

(54) **COMMUNICATION METHOD AND APPARATUS**

(30) Priority: 28.02.2024 CN 202410228130; 06.08.2024 CN 202411079612
(71) Applicant: Huawei Technologies Co., Ltd., Shenzhen, Guangdong 518129 (CN)
(72) Inventor: GAN, Ming, Shenzhen, Guangdong 518129 (CN); LI, Yunbo, Shenzhen, Guangdong 518129 (CN); YU, Jian, Shenzhen, Guangdong 518129 (CN); GUO, Yuchen, Shenzhen, Guangdong 518129 (CN)
(74) Representative: Grünecker Patent- und Rechtsanwälte PartG mbB
(86) International application number: PCT/CN2025/076445
(87) International publication number: WO 2025/180195

(57) **Abstract**

This application discloses a communication method and apparatus, and relates to the communication field. The method includes: receiving a trigger frame, where the trigger frame includes a first field and a first user information field that carries a second frame check sequence, the first field includes a first indication field, and the first indication field indicates a location of the second frame check sequence; and determining the location of the second frame check sequence based on the first indication field. In this application, the location of the second frame check sequence can be easily and quickly located. This greatly reduces power consumption of parsing the trigger frame, and increases a speed of determining the second frame check sequence or parsing the trigger frame.

## Description

This application claims priorities to Chinese Patent Application No. 202410228130.4, filed on February 28, 2024 and entitled "COMMUNICATION METHOD AND APPARATUS", and to Chinese Patent Application No. 202411079612.4, filed on August 6, 2024 and entitled "COMMUNICATION METHOD AND APPARATUS", both of which are incorporated herein by reference in their entireties.

### TECHNICAL FIELD

This application relates to the communication field, and in particular, to a communication method and apparatus.

### BACKGROUND

When a communication device is in a listening mode, the communication device may have limited sending and receiving capabilities or only a limited receiving capability. When another communication device (or referred to as a peer communication station) needs to send data to the communication device, the another communication device may first send an initial control frame (initial control frame) to the communication device. After receiving the initial control frame, the communication device exits the listening mode, and switches to an awake state with full sending and receiving capabilities, and then can perform communication with a stronger capability.

Currently, two frame check sequences are designed in the initial control frame: a frame check sequence 1 and a frame check sequence 2. The frame check sequence 2 is before the frame check sequence 1, and the frame check sequence 2 is carried in a user information field. The communication device may continuously analyze each user information field to determine a location of the frame check sequence 2. After receiving the frame check sequence 2 and confirming correctness, the communication device may exit the listening mode.

However, a process in which the communication device continuously analyzes each user information field to determine the location of the frame check sequence 2 results in high power consumption.

### SUMMARY

This application provides a communication method and apparatus, so that a communication device that receives a trigger frame can easily and quickly locate a location of a second frame check sequence in the trigger frame, thereby greatly reducing power consumption of the communication device.

According to a first aspect, this application provides a communication method. The method includes: receiving a trigger frame, where the trigger frame includes a first field and a first user information field that carries a second frame check sequence, the first field includes a first indication field, and the first indication field indicates a location of the second frame check sequence; and determining the location of the second frame check sequence based on the first indication field.

For example, the method in the first aspect may be applied to a first communication device, for example, a terminal device in a wireless local area network (wireless local area network, WLAN) or an access point (access point, AP) of a WLAN. For example, the method is performed by the first communication device or an apparatus (for example, a chip) built in the first communication device.

In the communication method, a communication device (for example, the first communication device) that receives the trigger frame can easily and quickly locate the location of the second frame check sequence. This greatly reduces power consumption of parsing the trigger frame by the communication device, increases a speed of determining the second frame check sequence or parsing the trigger frame by the communication device, and further reserves more time for the communication device to perform state switching.

Optionally, the first user information field is not at the end of the trigger frame.

The first communication device may have more time to perform state switching.

In a possible design, the trigger frame further includes a padding field and a first frame check sequence, the first user information field is before the padding field, and the first frame check sequence is after the padding field.

Optionally, a length of the padding field may be a variable (variable). In some possible scenarios, the length of the padding field may be 0. Alternatively, the length of the padding field may not be 0. This is not limited herein. For example, when the length of the padding field is 0, it may be considered that the padding field does not exist. For another example, when the length of the padding field is not 0, the length of the padding field may be 2 bytes or more bytes.

In a possible design, that the first indication field indicates the location of the second frame check sequence includes: the first indication field indicates a location of the first user information field.

For example, the location of the first user information field may mean a ranking of the first user information field. The first indication field may indicate the location of the first user information field by using a value.

Optionally, when the first user information field is one user information field, that is, when the second frame check sequence is carried in one user information field, the first indication field indicates the location of the first user information field. When the first user information field is two user information fields, that is, when the second frame check sequence is carried in two user information fields, the first indication field may indicate a location of a 1^{st} first user information field. When the first user information field is two user information fields, the two user information fields that carry the second frame check sequence may be consecutive.

In an implementation, that the first indication field indicates the location of the first user information field includes: a value of the first indication field is n, indicating that the first user information field is an (n+1)^{th} user information field after the first field.

Optionally, n is an integer greater than or equal to 0.

In another implementation, that the first indication field indicates the location of the first user information field includes: the first field is a common information field, and a value of the first indication field is n, indicating that the first user information field is an (n+l)^{th} user information field after a special user information field, where the special user information field is after the common information field. Optionally, the special user information field is adjacent to the common information field.

Optionally, n is an integer greater than or equal to 0.

In still another implementation, that the first indication field indicates the location of the first user information field includes: the first field is a special user information field, and a value of the first indication field is n, indicating that the first user information field is an (n+1)^{th} user information field after a common information field, where the special user information field is after the common information field.

Optionally, n is an integer greater than or equal to 0.

Optionally, in any one of the foregoing implementations, when the value of the first indication field is 0, it may indicate that the trigger frame does not include the second frame check sequence or the second frame check sequence does not exist. Alternatively, the value of the first indication field may be set to some special values to indicate that the second frame check sequence does not exist.

In another possible design, the first indication field may specifically indicate a length of the padding field, and the length of the padding field is used to determine the location of the second frame check sequence.

Optionally, in this design, a length of the first indication field may be 8 bits, 12 bits, 16 bits, or the like. The length of the first indication field is not limited in this application.

In still another possible design, the first indication field specifically indicates the number of bytes between the end of the first field and the second frame check sequence, and the number of bytes is used to determine the location of the second frame check sequence. Alternatively, the first indication field specifically indicates the number of bytes occupied by a user information field before the first user information field, and the number of bytes is used to determine the location of the second frame check sequence. Alternatively, the first indication field specifically indicates the number of bytes occupied by a user information field and a common information field that are before the first user information field, and the number of bytes is used to determine the location of the second frame check sequence. Alternatively, the first indication field specifically indicates the number of bytes occupied by a field between the second frame check sequence and the first frame check sequence, and the number of bytes is used to determine the location of the second frame check sequence. Alternatively, the first indication field specifically indicates the number of bytes occupied by a field between the first user information field and the first frame check sequence, and the number of bytes is used to determine the location of the second frame check sequence.

Optionally, in a design in which the first indication field indicates a length of the padding field or the number of bytes of another field, a value of the first indication field may be decreased based on the number of unit bits or unit bytes.

The value of the first indication field is decreased based on the number of unit bits or unit bytes, so that bits occupied by the first indication field can be reduced, thereby reducing signaling overheads.

In a possible scenario, the length of the padding field is 0.

In a possible design, the first field is a common information field or a special user information field.

Optionally, the first field is a common information field, and the first indication field is carried in at least one of B4 to B15, B22 to B53, and B63 in the common information field. Alternatively, the first field is a special user information field, and the first indication field is carried in at least one of B37 to B39 in the special user information field.

Optionally, the trigger frame may be of a multi-user request to send (multi-user request to send, MU-RTS) type, may be of a broadcast storm recovery protocol (broadcast storm recovery protocol, BSRP) type, or may be of another type. A type of the trigger frame is not limited in this application.

In some possible scenarios, the second frame check sequence is carried in one first user information field.

The second frame check sequence is carried in one first user information field, so that the communication device can reduce time in parsing the trigger frame. For example, the second frame check sequence can be obtained by parsing only one first user information field. This reduces power consumption of parsing the trigger frame by the communication device, increases a speed of determining the second frame check sequence or parsing the trigger frame by the communication device, and further reserves more time for the communication device to perform state switching. In addition, signaling overheads can be reduced.

In a possible design, the second frame check sequence occupies 4 bytes, and the first user information field includes an association identifier (AID12) field and a non-association identifier field. The second frame check sequence is carried in bits in the association identifier field and the non-association identifier field, and the second frame check sequence occupies at least 4 bits in the association identifier field.

For example, when the second frame check sequence occupies a length of 4 bytes (that is, 32 bits), a part of bits in an AID12 field in a user information field may be used together with a bit in the non-association identifier field to carry the second frame check sequence, so as to carry the second frame check sequence in one user information field.

In this design, at least 4 bits in the AID12 field may be used to carry a part of the second frame check sequence, and a remaining part of the second frame check sequence is carried in a bit in B12 to B39.

In some possible scenarios of this design, B11 in the association identifier field is 1, and B0 to B10 in the association identifier field are not all 1s.

B11 in the AID12 field is set to 1, and B0 to B10 in the association identifier field are set to non-all-ones values, so that consideration of the user information field that carries the second frame check sequence as a start of padding (Padding) can be avoided, and duplication with an AID of any associated station (STA) can be avoided.

In an implementation, B0 to B3 in the association identifier field and B12 to B39 in the non-association identifier field carry the second frame check sequence. In the association identifier field, B4 to B10 are non-all-ones values, and B11 is 1.

In this implementation, the second frame check sequence occupies a 4-bit AID12 field, equivalent to occupying 16 AID12 values. The communication device (for example, the first communication device) that receives the trigger frame may determine, based on B11=1 and B4 to B10 that are non-all-ones values in the user information field, a location of the user information field that carries the second frame check sequence, that is, determine that the user information field is the first user information field.

Optionally, in this implementation, B4 to B10 in the AID12 field may be specific non-all-ones values. The communication device (for example, the first communication device) that receives the trigger frame may determine, based on B11=1 and B4 to B10 that are specific non-all-ones values in the user information field, a location of the user information field that carries the second frame check sequence. B4 to B10 that are specific non-all-ones values can increase a speed of determining, by the communication device, the location of the user information field that carries the second frame check sequence.

In another implementation, B0 to B9 in the association identifier field and B12 to B33 in the non-association identifier field carry the second frame check sequence. In the association identifier field, B10 is 0, and B11 is 1.

In this implementation, the communication device (for example, the first communication device) that receives the trigger frame may determine, based on B11=1 and B10=0 in the user information field, a location of the user information field that carries the second frame check sequence, that is, determine that the user information field is the first user information field. The second frame check sequence occupies a 10-bit AID12 field, so that the location of the second frame check sequence can be further forward. In this way, the communication device (for example, the first communication device) that receives the trigger frame can perform frame check by using the second frame check sequence as early as possible, thereby reducing power consumption and completing state switching as early as possible.

In still another implementation, B0 to B3 in the association identifier field and B12 to B39 in the non-association identifier field carry the second frame check sequence. In the association identifier field, B10 is 0, and B11 is 1.

In this implementation, the communication device (for example, the first communication device) that receives the trigger frame may determine, based on B11=1 and B10=0 in the user information field, a location of the user information field that carries the second frame check sequence, that is, determine that the user information field is the first user information field.

Optionally, in this implementation, B4 to B9 in the AID12 field may alternatively be set to specific values or any values. This is not limited herein.

In a possible implementation, B0 to B10 in the association identifier field and B12 to B32 in the non-association identifier field carry the second frame check sequence. B11 in the association identifier field is 1.

In this implementation, the second frame check sequence occupies an 11-bit AID12 field, so that the location of the second frame check sequence can be further forward. In this way, the communication device (for example, the first communication device) that receives the trigger frame can perform frame check by using the second frame check sequence as early as possible, thereby reducing power consumption and completing state switching as early as possible.

In another possible design, the second frame check sequence occupies 1 or 2 bytes, and the first user information field includes an association identifier (AID12) field and a non-association identifier field. The second frame check sequence is carried in a bit in the association identifier field and/or a bit in the non-association identifier field.

Optionally, when the second frame check sequence is carried in a bit in the non-association identifier field, the association identifier field is a first value.

Optionally, when the second frame check sequence is carried in a bit in the association identifier field or carried in bits in the association identifier field and the non-association identifier field, B11 corresponding to the association identifier field is 1, and B0 to B10 corresponding to the association identifier field are not all 1s.

In still another possible design, the second frame check sequence occupies 28 bits, and the first user information field includes an association identifier (AID12) field and a non-association identifier field. The second frame check sequence is carried in a bit in the non-association identifier field.

Optionally, in this design, the association identifier field is a second value. The second value may be a specific value.

According to a second aspect, this application provides a communication apparatus. The apparatus has a function of implementing the method in the first aspect. The function may be implemented by hardware, or may be implemented by executing corresponding software by hardware. The hardware or the software includes one or more units or modules corresponding to the function of the method in the first aspect, for example, a receiving unit and a processing unit.

The receiving unit is configured to receive a trigger frame, where the trigger frame includes a first field and a first user information field that carries a second frame check sequence, the first field includes a first indication field, and the first indication field indicates a location of the second frame check sequence.

The processing unit is configured to determine the location of the second frame check sequence based on the first indication field.

Similarly, the apparatus may implement the function in any possible design or implementation of the first aspect. Details are not described again.

According to a third aspect, this application further provides a communication apparatus, including a processor, configured to execute computer instructions stored in a memory. When the computer instructions are executed, the apparatus is enabled to perform the method in any one of the first aspect or the possible designs of the first aspect.

According to a fourth aspect, this application further provides a communication apparatus, including a processor and an interface circuit. The processor is configured to: communicate with another apparatus through the interface circuit, and perform the method in any one of the first aspect or the possible designs of the first aspect.

For example, in the third aspect and the fourth aspect, the processor is configured to perform the method in any one of the first aspect or the possible designs of the first aspect.

The communication apparatus in any one of the second aspect to the fourth aspect may be a first communication device, or may be an apparatus (for example, a chip) built in a first communication device.

According to a fifth aspect, this application further provides a computer-readable storage medium, including computer software instructions, or referred to as instructions. When the computer software instructions are run, the method in any one of the first aspect or the possible designs of the first aspect is implemented. For example, when the computer software instructions are run in a first communication device or an apparatus (for example, a chip) built in a first communication device, the first communication device is enabled to implement the method in any one of the first aspect or the possible designs of the first aspect.

It may be understood that for beneficial effects that can be achieved in any one of the second aspect to the fifth aspect provided above, refer to the beneficial effects in any one of the first aspect or the possible designs of the first aspect. Details are not described herein again.

According to a sixth aspect, this application provides a communication method. The method includes: generating a trigger frame, where the trigger frame includes a first field and a first user information field that carries a second frame check sequence, the first field includes a first indication field, and the first indication field indicates a location of the second frame check sequence; and sending the trigger frame.

For example, the method in the sixth aspect may be applied to a second communication device, for example, a terminal device in a wireless local area network (wireless local area network, WLAN) or an access point (access point, AP) of a WLAN. For example, the method is performed by the second communication device or an apparatus (for example, a chip) built in the second communication device.

Optionally, the first user information field is not at the end of the trigger frame.

In a possible design, the trigger frame further includes a padding field and a first frame check sequence, the first user information field is before the padding field, and the first frame check sequence is after the padding field.

Optionally, a length of the padding field may be a variable (variable). In some possible scenarios, the length of the padding field may be 0. Alternatively, the length of the padding field may not be 0. This is not limited herein. For example, when the length of the padding field is 0, it may be considered that the padding field does not exist. For another example, when the length of the padding field is not 0, the length of the padding field may be 2 bytes or more bytes.

In a possible design, that the first indication field indicates the location of the second frame check sequence includes: the first indication field indicates a location of the first user information field.

For example, the location of the first user information field may mean a ranking of the first user information field. The first indication field may indicate the location of the first user information field by using a value.

Optionally, when the first user information field is one user information field, that is, when the second frame check sequence is carried in one user information field, the first indication field indicates the location of the first user information field. When the first user information field is two user information fields, that is, when the second frame check sequence is carried in two user information fields, the first indication field may indicate a location of a first user information field. When the first user information field is two user information fields, the two user information fields that carry the second frame check sequence may be consecutive.

In an implementation, that the first indication field indicates the location of the first user information field includes: a value of the first indication field is n, indicating that the first user information field is an (n+1)^{th} user information field after the first field.

Optionally, n is an integer greater than or equal to 0.

In another implementation, that the first indication field indicates the location of the first user information field includes: the first field is a common information field, and a value of the first indication field is n, indicating that the first user information field is an (n+l)^{th} user information field after a special user information field, where the special user information field is after the common information field. Optionally, the special user information field is adjacent to the common information field.

Optionally, n is an integer greater than or equal to 0.

In still another implementation, that the first indication field indicates the location of the first user information field includes: the first field is a special user information field, and a value of the first indication field is n, indicating that the first user information field is an (n+1)^{th} user information field after a common information field, where the special user information field is after the common information field.

Optionally, n is an integer greater than or equal to 0.

Optionally, in any one of the foregoing implementations, when the value of the first indication field is 0, it may indicate that the trigger frame does not include the second frame check sequence or the second frame check sequence does not exist. Alternatively, the value of the first indication field may be set to some special values to indicate that the second frame check sequence does not exist.

In another possible design, the first indication field may specifically indicate a length of the padding field, and the length of the padding field is used to determine the location of the second frame check sequence.

Optionally, in this design, a length of the first indication field may be 8 bits, 12 bits, 16 bits, or the like. The length of the first indication field is not limited in this application.

In still another possible design, the first indication field specifically indicates the number of bytes between the end of the first field and the second frame check sequence, and the number of bytes is used to determine the location of the second frame check sequence. Alternatively, the first indication field specifically indicates the number of bytes occupied by a user information field before the first user information field, and the number of bytes is used to determine the location of the second frame check sequence. Alternatively, the first indication field specifically indicates the number of bytes occupied by a user information field and a common information field that are before the first user information field, and the number of bytes is used to determine the location of the second frame check sequence. Alternatively, the first indication field specifically indicates the number of bytes occupied by a field between the second frame check sequence and the first frame check sequence, and the number of bytes is used to determine the location of the second frame check sequence. Alternatively, the first indication field specifically indicates the number of bytes occupied by a field between the first user information field and the first frame check sequence, and the number of bytes is used to determine the location of the second frame check sequence.

Optionally, in a design in which the first indication field indicates a length of the padding field or the number of bytes of another field, a value of the first indication field may be decreased based on the number of unit bits or unit bytes.

In a possible scenario, the length of the padding field is 0.

In a possible design, the first field is a common information field or a special user information field.

Optionally, the first field is a common information field, and the first indication field is carried in at least one of B4 to B15, B22 to B53, and B63 in the common information field. Alternatively, the first field is a special user information field, and the first indication field is carried in at least one of B37 to B39 in the special user information field.

Optionally, the trigger frame may be of a multi-user request to send (multi-user request to send, MU-RTS) type, may be of a broadcast storm recovery protocol (broadcast storm recovery protocol, BSRP) type, or may be of another type. A type of the trigger frame is not limited in this application.

In some possible scenarios, the second frame check sequence is carried in one first user information field.

The second frame check sequence is carried in one first user information field, so that a communication device can reduce time in parsing the trigger frame. For example, the second frame check sequence can be obtained by parsing only one first user information field. This reduces power consumption of parsing the trigger frame by the communication device, increases a speed of determining the second frame check sequence or parsing the trigger frame by the communication device, and further reserves more time for the communication device to perform state switching. In addition, signaling overheads can be reduced.

In a possible design, the second frame check sequence occupies 4 bytes, and the first user information field includes an association identifier (AID12) field and a non-association identifier field. The second frame check sequence is carried in bits in the association identifier field and the non-association identifier field, and the second frame check sequence occupies at least 4 bits in the association identifier field.

For example, when the second frame check sequence occupies a length of 4 bytes (that is, 32 bits), a part of bits in an AID12 field in a user information field may be used together with a bit in the non-association identifier field to carry the second frame check sequence, so as to carry the second frame check sequence in one user information field.

In this design, at least 4 bits in the AID 12 field may be used to carry a part of the second frame check sequence, and a remaining part of the second frame check sequence is carried in a bit in B12 to B39.

In some possible scenarios of this design, B11 in the association identifier field is 1, and B0 to B10 in the association identifier field are not all 1s.

In an implementation, B0 to B3 in the association identifier field and B12 to B39 in the non-association identifier field carry the second frame check sequence. In the association identifier field, B4 to B10 are non-all-ones values, and B11 is 1.

In this implementation, the second frame check sequence occupies a 4-bit AID12 field, equivalent to occupying 16 AID12 values. The communication device (for example, a first communication device) that receives the trigger frame may determine, based on B11=1 and B4 to B10 that are non-all-ones values in the user information field, a location of the user information field that carries the second frame check sequence, that is, determine that the user information field is the first user information field.

Optionally, in this implementation, B4 to B10 in the AID12 field may be specific non-all-ones values. The communication device (for example, a first communication device) that receives the trigger frame may determine, based on B11=1 and B4 to B10 that are specific non-all-ones values in the user information field, a location of the user information field that carries the second frame check sequence. B4 to B10 that are specific non-all-ones values can increase a speed of determining, by the communication device, the location of the user information field that carries the second frame check sequence.

In another implementation, B0 to B9 in the association identifier field and B12 to B33 in the non-association identifier field carry the second frame check sequence. In the association identifier field, B10 is 0, and B11 is 1.

In this implementation, the communication device (for example, a first communication device) that receives the trigger frame may determine, based on B11=1 and B10=0 in the user information field, a location of the user information field that carries the second frame check sequence, that is, determine that the user information field is the first user information field. The second frame check sequence occupies a 10-bit AID12 field, so that the location of the second frame check sequence can be further forward. In this way, the communication device (for example, the first communication device) that receives the trigger frame can perform frame check by using the second frame check sequence as early as possible, thereby reducing power consumption and completing state switching as early as possible.

In still another implementation, B0 to B3 in the association identifier field and B12 to B39 in the non-association identifier field carry the second frame check sequence. In the association identifier field, B10 is 0, and B11 is 1.

In this implementation, the communication device (for example, a first communication device) that receives the trigger frame may determine, based on B11=1 and B10=0 in the user information field, a location of the user information field that carries the second frame check sequence, that is, determine that the user information field is the first user information field.

Optionally, in this implementation, B4 to B9 in the AID12 field may alternatively be set to specific values or any values. This is not limited herein.

In a possible implementation, B0 to B10 in the association identifier field and B12 to B32 in the non-association identifier field carry the second frame check sequence. B11 in the association identifier field is 1.

In another possible design, the second frame check sequence occupies 1 or 2 bytes, and the first user information field includes an association identifier (AID12) field and a non-association identifier field. The second frame check sequence is carried in a bit in the association identifier field and/or a bit in the non-association identifier field.

Optionally, when the second frame check sequence is carried in a bit in the non-association identifier field, the association identifier field is a first value.

Optionally, when the second frame check sequence is carried in a bit in the association identifier field or carried in bits in the association identifier field and the non-association identifier field, B11 corresponding to the association identifier field is 1, and B0 to B10 corresponding to the association identifier field are not all 1s.

In still another possible design, the second frame check sequence occupies 28 bits, and the first user information field includes an association identifier (AID12) field and a non-association identifier field. The second frame check sequence is carried in a bit in the non-association identifier field.

Optionally, in this design, the association identifier field is a second value. The second value may be a specific value.

For the sixth aspect provided above and beneficial effects that can be achieved, refer to the beneficial effects in the first aspect. For example, the communication device (for example, the first communication device) that receives the trigger frame can easily and quickly locate the location of the second frame check sequence. This greatly reduces power consumption of parsing the trigger frame by the communication device, increases a speed of determining the second frame check sequence or parsing the trigger frame by the communication device, and further reserves more time for the communication device to perform state switching. Details are not described herein again.

According to a seventh aspect, this application provides a communication apparatus. The apparatus has a function of implementing the method in the sixth aspect. The function may be implemented by hardware, or may be implemented by executing corresponding software by hardware. The hardware or the software includes one or more units or modules corresponding to the function of the method in the sixth aspect, for example, a processing unit and a sending unit.

The processing unit is configured to generate a trigger frame, where the trigger frame includes a first field and a first user information field that carries a second frame check sequence, the first field includes a first indication field, and the first indication field indicates a location of the second frame check sequence. The sending unit is configured to send the trigger frame.

Similarly, the apparatus may implement the function in any possible design or implementation of the sixth aspect. Details are not described again.

According to an eighth aspect, this application further provides a communication apparatus, including a processor, configured to execute computer instructions stored in a memory. When the computer instructions are executed, the apparatus is enabled to perform the method in any one of the sixth aspect or the possible designs of the sixth aspect.

According to a ninth aspect, this application further provides a communication apparatus, including a processor and an interface circuit. The processor is configured to: communicate with another apparatus through the interface circuit, and perform the method in any one of the sixth aspect or the possible designs of the sixth aspect.

For example, in the eighth aspect and the ninth aspect, the processor is configured to perform the method in any one of the sixth aspect or the possible designs of the sixth aspect.

The communication apparatus in any one of the seventh aspect to the ninth aspect may be a second communication device, or may be an apparatus (for example, a chip) built in a second communication device.

According to a tenth aspect, this application further provides a computer-readable storage medium, including computer software instructions, or referred to as instructions. When the computer software instructions are run, the method in any one of the sixth aspect or the possible designs of the sixth aspect is implemented. For example, when the computer software instructions are run in a second communication device or an apparatus (for example, a chip) built in a second communication device, the second communication device is enabled to implement the method in any one of the sixth aspect or the possible designs of the sixth aspect.

It may be understood that for beneficial effects that can be achieved in any one of the seventh aspect to the tenth aspect provided above, refer to the beneficial effects in any one of the sixth aspect or the possible designs of the sixth aspect. Details are not described herein again.

According to an eleventh aspect, this application provides a communication method. The method includes: receiving a trigger frame, where the trigger frame includes a first user information field that carries a second frame check sequence, the second frame check sequence is used to check content before the second frame check sequence in the trigger frame, and the second frame check sequence is carried in one first user information field; and checking the content before the second frame check sequence in the trigger frame based on the second frame check sequence.

For example, the method in the eleventh aspect may be applied to a first communication device, for example, a terminal device in a wireless local area network (wireless local area network, WLAN) or an access point (access point, AP) of a WLAN. For example, the method is performed by the first communication device or an apparatus (for example, a chip) built in the first communication device.

In the communication method, the second frame check sequence is carried in one first user information field, so that a communication device can reduce time in parsing the trigger frame. For example, the second FCS can be obtained by parsing only one first user information field. This reduces power consumption of parsing the trigger frame by the communication device, increases a speed of determining the second frame check sequence or parsing the trigger frame by the communication device, and further reserves more time for the communication device to perform state switching. In addition, signaling overheads can be reduced in the communication method.

In a possible design, the second frame check sequence occupies 4 bytes, and the first user information field includes an association identifier (AID12) field and a non-association identifier field. The second frame check sequence is carried in bits in the association identifier field and the non-association identifier field, and the second frame check sequence occupies at least 4 bits in the association identifier field.

For example, when the second frame check sequence occupies a length of 4 bytes (that is, 32 bits), a part of bits in an AID12 field in a user information field may be used together with a bit in the non-association identifier field to carry the second frame check sequence, so as to carry the second frame check sequence in one user information field.

In this design, at least 4 bits in the AID12 field may be used to carry a part of the second frame check sequence, and a remaining part of the second frame check sequence is carried in a bit in B12 to B39.

In some possible scenarios of this design, B11 in the association identifier field is 1, and B0 to B10 in the association identifier field are not all 1s.

B11 in the AID12 field is set to 1, and B0 to B10 in the association identifier field are set to non-all-ones values, so that consideration of the user information field that carries the second frame check sequence as a start of padding (Padding) can be avoided, and duplication with an AID of any associated station (STA) can be avoided.

In an implementation, B0 to B3 in the association identifier field and B12 to B39 in the non-association identifier field carry the second frame check sequence. In the association identifier field, B4 to B10 are non-all-ones values, and B11 is 1.

In this implementation, the second frame check sequence occupies a 4-bit AID12 field, equivalent to occupying 16 AID12 values. The communication device (for example, the first communication device) that receives the trigger frame may determine, based on B11=1 and B4 to B10 that are non-all-ones values in the user information field, a location of the user information field that carries the second frame check sequence, that is, determine that the user information field is the first user information field.

Optionally, in this implementation, B4 to B10 in the AID12 field may be specific non-all-ones values. The communication device (for example, the first communication device) that receives the trigger frame may determine, based on B11=1 and B4 to B10 that are specific non-all-ones values in the user information field, a location of the user information field that carries the second frame check sequence. B4 to B10 that are specific non-all-ones values can increase a speed of determining, by the communication device, the location of the user information field that carries the second frame check sequence.

In another implementation, B0 to B9 in the association identifier field and B12 to B33 in the non-association identifier field carry the second frame check sequence. In the association identifier field, B10 is 0, and B1 is 1.

In this implementation, the communication device (for example, the first communication device) that receives the trigger frame may determine, based on B11=1 and B10=0 in the user information field, a location of the user information field that carries the second frame check sequence, that is, determine that the user information field is the first user information field. The second frame check sequence occupies a 10-bit AID12 field, so that a location of the second frame check sequence can be further forward. In this way, the communication device (for example, the first communication device) that receives the trigger frame can perform frame check by using the second frame check sequence as early as possible, thereby reducing power consumption and completing state switching as early as possible.

In still another implementation, B0 to B3 in the association identifier field and B12 to B39 in the non-association identifier field carry the second frame check sequence. In the association identifier field, B10 is 0, and B11 is 1.

In this implementation, the communication device (for example, the first communication device) that receives the trigger frame may determine, based on B11=1 and B10=0 in the user information field, a location of the user information field that carries the second frame check sequence, that is, determine that the user information field is the first user information field.

Optionally, in this implementation, B4 to B9 in the AID12 field may alternatively be set to specific values or any values. This is not limited herein.

In a possible implementation, B0 to B10 in the association identifier field and B12 to B32 in the non-association identifier field carry the second frame check sequence. B11 in the association identifier field is 1.

In this implementation, the second frame check sequence occupies an 11-bit AID12 field, so that a location of the second frame check sequence can be further forward. In this way, the communication device (for example, the first communication device) that receives the trigger frame can perform frame check by using the second frame check sequence as early as possible, thereby reducing power consumption and completing state switching as early as possible.

Optionally, in this implementation, the trigger frame further includes a first field, the first field includes a first indication field, and the first indication field indicates a location of the second frame check sequence. The method further includes: determining the location of the second frame check sequence based on the first indication field.

In this implementation, when B0 to B10 are all 1s, a conflict with a start of a padding field may occur, and the communication device (for example, the first communication device) that receives the trigger frame cannot determine whether it is a user information field that carries the second frame check sequence or the start of the padding field. In this implementation, this problem may be resolved by indicating the location of the second frame check sequence.

Optionally, for a specific manner of indicating the location of the second frame check sequence, refer to the descriptions in the first aspect. Details are not described again.

In another possible design, the second frame check sequence occupies 1 or 2 bytes, and the first user information field includes an association identifier (AID12) field and a non-association identifier field. The second frame check sequence is carried in a bit in the association identifier field and/or a bit in the non-association identifier field.

Optionally, when the second frame check sequence is carried in a bit in the non-association identifier field, the association identifier field is a first value.

Optionally, when the second frame check sequence is carried in a bit in the association identifier field or carried in bits in the association identifier field and the non-association identifier field, B11 corresponding to the association identifier field is 1, and B0 to B10 corresponding to the association identifier field are not all 1s.

In still another possible design, the second frame check sequence occupies 28 bits, and the first user information field includes an association identifier (AID12) field and a non-association identifier field. The second frame check sequence is carried in a bit in the non-association identifier field.

Optionally, in this design, the association identifier field is a second value. The second value may be a specific value.

According to a twelfth aspect, this application provides a communication apparatus. The apparatus has a function of implementing the method in the eleventh aspect. The function may be implemented by hardware, or may be implemented by executing corresponding software by hardware. The hardware or the software includes one or more units or modules corresponding to the function of the method in the eleventh aspect, for example, a receiving unit and a processing unit.

The receiving unit is configured to receive a trigger frame, where the trigger frame includes a first user information field that carries a second frame check sequence, the second frame check sequence is used to check content before the second frame check sequence in the trigger frame, and the second frame check sequence is carried in one first user information field.

The processing unit is configured to check the content before the second frame check sequence in the trigger frame based on the second frame check sequence.

Similarly, the apparatus may implement the function in any possible design or implementation of the eleventh aspect. Details are not described again.

According to a thirteenth aspect, this application further provides a communication apparatus, including a processor, configured to execute computer instructions stored in a memory. When the computer instructions are executed, the apparatus is enabled to perform the method in any one of the eleventh aspect or the possible designs of the eleventh aspect.

According to a fourteenth aspect, this application further provides a communication apparatus, including a processor and an interface circuit. The processor is configured to: communicate with another apparatus through the interface circuit, and perform the method in any one of the eleventh aspect or the possible designs of the eleventh aspect.

For example, in the thirteenth aspect and the fourteenth aspect, the processor is configured to perform the method in any one of the eleventh aspect or the possible designs of the eleventh aspect.

The communication apparatus in any one of the twelfth aspect to the fourteenth aspect may be a first communication device, or may be an apparatus (for example, a chip) built in a first communication device.

According to a fifteenth aspect, this application further provides a computer-readable storage medium, including computer software instructions, or referred to as instructions. When the computer software instructions are run, the method in any one of the eleventh aspect or the possible designs of the eleventh aspect is implemented. For example, when the computer software instructions are run in a first communication device or an apparatus (for example, a chip) built in a first communication device, the first communication device is enabled to implement the method in any one of the eleventh aspect or the possible designs of the eleventh aspect.

It may be understood that for beneficial effects that can be achieved in any one of the twelfth aspect to the fifteenth aspect provided above, refer to the beneficial effects in any one of the eleventh aspect or the possible designs of the eleventh aspect. Details are not described herein again.

According to a sixteenth aspect, this application provides a communication method. The method includes: generating a trigger frame, where the trigger frame includes a first user information field that carries a second frame check sequence, the second frame check sequence is used to check content before the second frame check sequence in the trigger frame, and the second frame check sequence is carried in one first user information field; and sending the trigger frame.

For example, the method in the sixteenth aspect may be applied to a second communication device, for example, a terminal device in a wireless local area network (wireless local area network, WLAN) or an access point (access point, AP) of a WLAN. For example, the method is performed by the second communication device or an apparatus (for example, a chip) built in the second communication device.

In a possible design, the second frame check sequence occupies 4 bytes, and the first user information field includes an association identifier (AID12) field and a non-association identifier field. The second frame check sequence is carried in bits in the association identifier field and the non-association identifier field, and the second frame check sequence occupies at least 4 bits in the association identifier field.

For example, when the second frame check sequence occupies a length of 4 bytes (that is, 32 bits), a part of bits in an AID12 field in a user information field may be used together with a bit in the non-association identifier field to carry the second frame check sequence, so as to carry the second frame check sequence in one user information field.

In this design, at least 4 bits in the AID12 field may be used to carry a part of the second frame check sequence, and a remaining part of the second frame check sequence is carried in a bit in B12 to B39.

In some possible scenarios of this design, B11 in the association identifier field is 1, and B0 to B10 in the association identifier field are not all 1s.

In an implementation, B0 to B3 in the association identifier field and B12 to B39 in the non-association identifier field carry the second frame check sequence. In the association identifier field, B4 to B10 are non-all-ones values, and B11 is 1.

In this implementation, the second frame check sequence occupies a 4-bit AID12 field, equivalent to occupying 16 AID12 values. A communication device (for example, a first communication device) that receives the trigger frame may determine, based on B11=1 and B4 to B10 that are non-all-ones values in the user information field, a location of the user information field that carries the second frame check sequence, that is, determine that the user information field is the first user information field.

Optionally, in this implementation, B4 to B10 in the AID12 field may be specific non-all-ones values. A communication device (for example, a first communication device) that receives the trigger frame may determine, based on B11=1 and B4 to B10 that are specific non-all-ones values in the user information field, a location of the user information field that carries the second frame check sequence. B4 to B10 that are specific non-all-ones values can increase a speed of determining, by the communication device, the location of the user information field that carries the second frame check sequence.

In another implementation, B0 to B9 in the association identifier field and B12 to B33 in the non-association identifier field carry the second frame check sequence. In the association identifier field, B10 is 0, and B11 is 1.

In this implementation, a communication device (for example, a first communication device) that receives the trigger frame may determine, based on B11=1 and B10=0 in the user information field, a location of the user information field that carries the second frame check sequence, that is, determine that the user information field is the first user information field. The second frame check sequence occupies a 10-bit AID12 field, so that a location of the second frame check sequence can be further forward. In this way, the communication device (for example, the first communication device) that receives the trigger frame can perform frame check by using the second frame check sequence as early as possible, thereby reducing power consumption and completing state switching as early as possible.

In still another implementation, B0 to B3 in the association identifier field and B12 to B39 in the non-association identifier field carry the second frame check sequence. In the association identifier field, B10 is 0, and B11 is 1.

In this implementation, a communication device (for example, a first communication device) that receives the trigger frame may determine, based on B11=1 and B10=0 in the user information field, a location of the user information field that carries the second frame check sequence, that is, determine that the user information field is the first user information field.

Optionally, in this implementation, B4 to B9 in the AID12 field may alternatively be set to specific values or any values. This is not limited herein.

In a possible implementation, B0 to B10 in the association identifier field and B12 to B32 in the non-association identifier field carry the second frame check sequence. B11 in the association identifier field is 1.

Optionally, in this implementation, the trigger frame further includes a first field, the first field includes a first indication field, and the first indication field indicates a location of the second frame check sequence.

In another possible design, the second frame check sequence occupies 1 or 2 bytes, and the first user information field includes an association identifier (AID12) field and a non-association identifier field. The second frame check sequence is carried in a bit in the association identifier field and/or a bit in the non-association identifier field.

Optionally, when the second frame check sequence is carried in a bit in the non-association identifier field, the association identifier field is a first value.

Optionally, when the second frame check sequence is carried in a bit in the association identifier field or carried in bits in the association identifier field and the non-association identifier field, B11 corresponding to the association identifier field is 1, and B0 to B10 corresponding to the association identifier field are not all 1s.

In still another possible design, the second frame check sequence occupies 28 bits, and the first user information field includes an association identifier (AID12) field and a non-association identifier field. The second frame check sequence is carried in a bit in the non-association identifier field.

Optionally, in this design, the association identifier field is a second value. The second value may be a specific value.

For the sixteenth aspect provided above and beneficial effects that can be achieved, refer to the beneficial effects in the eleventh aspect. For example, the second frame check sequence is carried in one first user information field, so that the communication device can reduce time in parsing the trigger frame. For example, the second frame check sequence can be obtained by parsing only one first user information field. This reduces power consumption of parsing the trigger frame by the communication device, increases a speed of determining the second frame check sequence or parsing the trigger frame by the communication device, and further reserves more time for the communication device to perform state switching. In addition, signaling overheads can be reduced. Details are not described herein again.

According to a seventeenth aspect, this application provides a communication apparatus. The apparatus has a function of implementing the method in the sixteenth aspect. The function may be implemented by hardware, or may be implemented by executing corresponding software by hardware. The hardware or the software includes one or more units or modules corresponding to the function of the method in the sixteenth aspect, for example, a processing unit and a sending unit.

The processing unit is configured to generate a trigger frame, where the trigger frame includes a first user information field that carries a second frame check sequence, the second frame check sequence is used to check content before the second frame check sequence in the trigger frame, and the second frame check sequence is carried in one first user information field. The sending unit is configured to send the trigger frame.

Similarly, the apparatus may implement the function in any possible design or implementation of the sixteenth aspect. Details are not described again.

According to an eighteenth aspect, this application further provides a communication apparatus, including a processor, configured to execute computer instructions stored in a memory. When the computer instructions are executed, the apparatus is enabled to perform the method in any one of the sixteenth aspect or the possible designs of the sixteenth aspect.

According to a nineteenth aspect, this application further provides a communication apparatus, including a processor and an interface circuit. The processor is configured to: communicate with another apparatus through the interface circuit, and perform the method in any one of the sixteenth aspect or the possible designs of the sixteenth aspect.

For example, in the eighteenth aspect and the nineteenth aspect, the processor is configured to perform the method in any one of the sixteenth aspect or the possible designs of the sixteenth aspect.

The communication apparatus in any one of the seventeenth aspect to the nineteenth aspect may be a second communication device, or may be an apparatus (for example, a chip) built in a second communication device.

According to a twentieth aspect, this application further provides a computer-readable storage medium, including computer software instructions, or referred to as instructions. When the computer software instructions are run, the method in any one of the sixteenth aspect or the possible designs of the sixteenth aspect is implemented. For example, when the computer software instructions are run in a second communication device or an apparatus (for example, a chip) built in a second communication device, the second communication device is enabled to implement the method in any one of the sixteenth aspect or the possible designs of the sixteenth aspect.

It may be understood that for beneficial effects that can be achieved in any one of the seventeenth aspect to the twentieth aspect provided above, refer to the beneficial effects in any one of the sixteenth aspect or the possible designs of the sixteenth aspect. Details are not described herein again.

According to a twenty-first aspect, this application provides a communication method. The method includes: receiving a trigger frame, where the trigger frame includes a first field, the first field includes a first indication field, the first indication field indicates whether the trigger frame includes a second frame check sequence, and the second frame check sequence is carried in a first user information field in the trigger frame; and determining, based on the first indication field, whether the trigger frame includes the second frame check sequence.

For example, the method in the twenty-first aspect may be applied to a first communication device, for example, a terminal device in a wireless local area network (wireless local area network, WLAN) or an access point (access point, AP) of a WLAN. For example, the method is performed by the first communication device or an apparatus (for example, a chip) built in the first communication device.

In the communication method, when learning, based on the first indication field, that the trigger frame does not include the second frame check sequence, a communication device (for example, the first communication device) that receives the trigger frame may no longer analyze a subsequent user information field after AID12 is a user information field that matches the communication device, thereby effectively reducing power consumption. In addition, the first indication field indicates only whether the trigger frame includes the second frame check sequence, thereby effectively reducing signaling overheads.

Optionally, for a structure of the trigger frame, refer to the descriptions in the first aspect. Details are not described again.

Optionally, the first field may be a common information field or a special user information field.

Optionally, the first indication field may occupy one or more bits in the first field, indicating whether the trigger frame includes the second frame check sequence. For example, when a value of the bit occupied by the first indication field is 0, it indicates that the trigger frame does not include the second frame check sequence; or when a value of the bit occupied by the first indication field is not 0, for example, is 1, it indicates that the trigger frame includes the second frame check sequence.

Optionally, the second frame check sequence may be carried in two user information fields, or may be carried in one user information field. This is not limited herein.

According to a twenty-second aspect, this application provides a communication apparatus. The apparatus has a function of implementing the method in the twenty-first aspect. The function may be implemented by hardware, or may be implemented by executing corresponding software by hardware. The hardware or the software includes one or more units or modules corresponding to the function of the method in the twenty-first aspect, for example, a receiving unit and a processing unit.

The receiving unit is configured to receive a trigger frame, where the trigger frame includes a first field, the first field includes a first indication field, the first indication field indicates whether the trigger frame includes a second frame check sequence, and the second frame check sequence is carried in a first user information field in the trigger frame.

The processing unit is configured to determine, based on the first indication field, whether the trigger frame includes the second frame check sequence.

Similarly, the apparatus may implement the function in any possible design or implementation of the twenty-first aspect. Details are not described again.

According to a twenty-third aspect, this application further provides a communication apparatus, including a processor, configured to execute computer instructions stored in a memory. When the computer instructions are executed, the apparatus is enabled to perform the method in any one of the twenty-first aspect or the possible designs of the twenty-first aspect.

According to a twenty-fourth aspect, this application further provides a communication apparatus, including a processor and an interface circuit. The processor is configured to: communicate with another apparatus through the interface circuit, and perform the method in any one of the twenty-first aspect or the possible designs of the twenty-first aspect.

For example, in the twenty-third aspect and the twenty-fourth aspect, the processor is configured to perform the method in any one of the twenty-first aspect or the possible designs of the twenty-first aspect.

The communication apparatus in any one of the twenty-second aspect to the twenty-fourth aspect may be a first communication device, or may be an apparatus (for example, a chip) built in a first communication device.

According to a twenty-fifth aspect, this application further provides a computer-readable storage medium, including computer software instructions, or referred to as instructions. When the computer software instructions are run, the method in any one of the twenty-first aspect or the possible designs of the twenty-first aspect is implemented. For example, when the computer software instructions are run in a first communication device or an apparatus (for example, a chip) built in a first communication device, the first communication device is enabled to implement the method in any one of the twenty-first aspect or the possible designs of the twenty-first aspect.

It may be understood that for beneficial effects that can be achieved in any one of the twenty-second aspect to the twenty-fifth aspect provided above, refer to the beneficial effects in any one of the twenty-first aspect or the possible designs of the twenty-first aspect. Details are not described herein again.

According to a twenty-sixth aspect, this application provides a communication method. The method includes: generating a trigger frame, where the trigger frame includes a first field, the first field includes a first indication field, the first indication field indicates whether the trigger frame includes a second frame check sequence, and the second frame check sequence is carried in a first user information field in the trigger frame; and sending the trigger frame.

For example, the method in the twenty-sixth aspect may be applied to a second communication device, for example, a terminal device in a wireless local area network (wireless local area network, WLAN) or an access point (access point, AP) of a WLAN. For example, the method is performed by the second communication device or an apparatus (for example, a chip) built in the second communication device.

Optionally, for a structure of the trigger frame, refer to the descriptions in the first aspect. Details are not described again.

Optionally, the first field may be a common information field or a special user information field.

Optionally, the first indication field may occupy one or more bits in the first field, indicating whether the trigger frame includes the second frame check sequence. For example, when a value of the bit occupied by the first indication field is 0, it indicates that the trigger frame does not include the second frame check sequence; or when a value of the bit occupied by the first indication field is not 0, for example, is 1, it indicates that the trigger frame includes the second frame check sequence.

Optionally, the second frame check sequence may be carried in two user information fields, or may be carried in one user information field. This is not limited herein.

For the twenty-sixth aspect provided above and beneficial effects that can be achieved, refer to the beneficial effects in the twenty-first aspect. For example, when learning, based on the first indication field, that the trigger frame does not include the second frame check sequence, a communication device (for example, a first communication device) that receives the trigger frame may no longer analyze a subsequent user information field after AID12 is a user information field that matches the communication device, thereby effectively reducing power consumption. In addition, the first indication field indicates only whether the trigger frame includes the second frame check sequence, thereby effectively reducing signaling overheads. Details are not described herein again.

According to a twenty-seventh aspect, this application provides a communication apparatus. The apparatus has a function of implementing the method in the twenty-sixth aspect. The function may be implemented by hardware, or may be implemented by executing corresponding software by hardware. The hardware or the software includes one or more units or modules corresponding to the function of the method in the twenty-sixth aspect, for example, a processing unit and a sending unit.

The processing unit is configured to generate a trigger frame, where the trigger frame includes a first field, the first field includes a first indication field, the first indication field indicates whether the trigger frame includes a second frame check sequence, and the second frame check sequence is carried in a first user information field in the trigger frame. The sending unit is configured to send the trigger frame.

Similarly, the apparatus may implement the function in any possible design or implementation of the twenty-sixth aspect. Details are not described again.

According to a twenty-eighth aspect, this application further provides a communication apparatus, including a processor, configured to execute computer instructions stored in a memory. When the computer instructions are executed, the apparatus is enabled to perform the method in any one of the twenty-sixth aspect or the possible designs of the twenty-sixth aspect.

According to a twenty-ninth aspect, this application further provides a communication apparatus, including a processor and an interface circuit. The processor is configured to: communicate with another apparatus through the interface circuit, and perform the method in any one of the twenty-sixth aspect or the possible designs of the twenty-sixth aspect.

For example, in the twenty-eighth aspect and the twenty-ninth aspect, the processor is configured to perform the method in any one of the twenty-sixth aspect or the possible designs of the twenty-sixth aspect.

The communication apparatus in any one of the twenty-seventh aspect to the twenty-ninth aspect may be a second communication device, or may be an apparatus (for example, a chip) built in a second communication device.

According to a thirtieth aspect, this application further provides a computer-readable storage medium, including computer software instructions, or referred to as instructions. When the computer software instructions are run, the method in any one of the twenty-sixth aspect or the possible designs of the twenty-sixth aspect is implemented. For example, when the computer software instructions are run in a second communication device or an apparatus (for example, a chip) built in a second communication device, the second communication device is enabled to implement the method in any one of the twenty-sixth aspect or the possible designs of the twenty-sixth aspect.

It may be understood that for beneficial effects that can be achieved in any one of the twenty-seventh aspect to the thirtieth aspect provided above, refer to the beneficial effects in any one of the twenty-sixth aspect or the possible designs of the twenty-sixth aspect. Details are not described herein again.

According to a thirty-first aspect, this application provides a communication apparatus, including a transceiver unit and a processing unit. The transceiver unit may be configured to send and receive information, or configured to communicate with another network element. The processing unit may be configured to process data. The apparatus may implement the method in any one of the first aspect and the possible designs of the first aspect, the method in any one of the sixth aspect and the possible designs of the sixth aspect, the method in any one of the eleventh aspect and the possible designs of the eleventh aspect, the method in any one of the sixteenth aspect and the possible designs of the sixteenth aspect, the method in any one of the twenty-first aspect and the possible designs of the twenty-first aspect, or the method in any one of the twenty-sixth aspect and the possible designs of the twenty-sixth aspect through the transceiver unit and the processing unit.

According to a thirty-second aspect, this application further provides a computer program product. When the computer program product is executed, the method in any one of the first aspect and the possible designs of the first aspect, the method in any one of the sixth aspect and the possible designs of the sixth aspect, the method in any one of the eleventh aspect and the possible designs of the eleventh aspect, the method in any one of the sixteenth aspect and the possible designs of the sixteenth aspect, the method in any one of the twenty-first aspect and the possible designs of the twenty-first aspect, or the method in any one of the twenty-sixth aspect and the possible designs of the twenty-sixth aspect may be implemented.

According to a thirty-third aspect, this application further provides a chip system. The chip system includes one or more interface circuits and one or more processors. The interface circuit and the processor are interconnected through a line. The processor receives computer instructions from a memory of an electronic device through the interface circuit and executes the computer instructions, to implement the method in any one of the first aspect and the possible designs of the first aspect, the method in any one of the sixth aspect and the possible designs of the sixth aspect, the method in any one of the eleventh aspect and the possible designs of the eleventh aspect, the method in any one of the sixteenth aspect and the possible designs of the sixteenth aspect, the method in any one of the twenty-first aspect and the possible designs of the twenty-first aspect, or the method in any one of the twenty-sixth aspect and the possible designs of the twenty-sixth aspect.

According to a thirty-fourth aspect, this application further provides a communication system, including a first communication device and a second communication device. The first communication device performs the method in any one of the first aspect and the possible designs of the first aspect; and the second communication device performs the method in any one of the sixth aspect and the possible designs of the sixth aspect.

Alternatively, the first communication device performs the method in any one of the eleventh aspect and the possible designs of the eleventh aspect; and the second communication device performs the method in any one of the sixteenth aspect and the possible designs of the sixteenth aspect.

Alternatively, the first communication device performs the method in any one of the twenty-first aspect and the possible designs of the twenty-first aspect; and the second communication device performs the method in any one of the twenty-sixth aspect and the possible designs of the twenty-sixth aspect.

According to a thirty-fifth aspect, this application further provides a communication device. The communication device may be configured to implement the method in any one of the first aspect and the possible designs of the first aspect, the method in any one of the sixth aspect and the possible designs of the sixth aspect, the method in any one of the eleventh aspect and the possible designs of the eleventh aspect, the method in any one of the sixteenth aspect and the possible designs of the sixteenth aspect, the method in any one of the twenty-first aspect and the possible designs of the twenty-first aspect, or the method in any one of the twenty-sixth aspect and the possible designs of the twenty-sixth aspect.

It may be understood that for beneficial effects that can be achieved in the thirty-first aspect to the thirty-fifth aspect provided above, refer to the beneficial effects in the first aspect, the sixth aspect, the eleventh aspect, the sixteenth aspect, the twenty-first aspect, the twenty-sixth aspect, and the like. Details are not described herein again.

### BRIEF DESCRIPTION OF DRAWINGS

FIG. 1 is a diagram of a structure of a trigger frame;
FIG. 2 is a diagram of composition of a communication system according to an embodiment of this application;
FIG. 3 is a diagram of composition of a communication device according to an embodiment of this application;
FIG. 4 is a schematic flowchart of a communication method according to an embodiment of this application;
FIG. 5 is a diagram of a structure of a user information field according to an embodiment of this application;
FIG. 6 is a diagram of a structure of an HE-type common information field according to an embodiment of this application;
FIG. 7 is a diagram of a structure of an EHT-type common information field according to an embodiment of this application;
FIG. 8 is a diagram of a structure of another trigger frame according to an embodiment of this application;
FIG. 9 is a diagram of a structure of a Special User Info field according to an embodiment of this application;
FIG. 10 is another schematic flowchart of a communication method according to an embodiment of this application;
FIG. 11 is a diagram of a structure of still another trigger frame according to an embodiment of this application;
FIG. 12 is a diagram of a structure of a first user information field that carries a second frame check sequence according to an embodiment of this application;
FIG. 13 is a diagram of a structure of another first user information field that carries a second frame check sequence according to an embodiment of this application;
FIG. 14 is a diagram of a structure of still another first user information field that carries a second frame check sequence according to an embodiment of this application;
FIG. 15 is a diagram of a structure of still another first user information field that carries a second frame check sequence according to an embodiment of this application;
FIG. 16 is a diagram of a structure of still another first user information field that carries a second frame check sequence according to an embodiment of this application;
FIG. 17 is a diagram of a structure of still another first user information field that carries a second frame check sequence according to an embodiment of this application;
FIG. 18 is a diagram of a structure of still another first user information field that carries a second frame check sequence according to an embodiment of this application;
FIG. 19 is a diagram of a structure of still another first user information field that carries a second frame check sequence according to an embodiment of this application;
FIG. 20 is still another schematic flowchart of a communication method according to an embodiment of this application;
FIG. 21 is a diagram of a structure of a communication apparatus according to an embodiment of this application; and
FIG. 22 is a diagram of a structure of a communication apparatus according to an embodiment of this application.

### DESCRIPTION OF EMBODIMENTS

In communication technologies, power saving (power saving) is a very important feature that a communication device needs to have. For example, in a wireless local area network (wireless local area network, WLAN) standard, two states (or referred to as modes) are introduced for a client/station (station, STA): doze (doze) and awake (awake). The STA may also be referred to as a station or a terminal device. The STA does not have any sending and receiving capabilities in the doze state, and may send and receive data in the awake state. Power consumption of the STA may be reduced by enabling the STA to be in the doze state as much as possible. However, this method is not flexible enough, and there is a high delay in data transmission of the STA.

To reduce the power consumption and reduce the data transmission delay, a listening state (or referred to as a listening mode) may be introduced for the STA. The listening state may also be referred to as a special awake state. In the listening state, the STA may have limited sending and receiving capabilities or only a limited receiving capability, and is in a low-power state. In the listening state, when the STA has no data to send or receive, power consumption can be significantly lower than that in the awake state. When the STA needs to send data, the STA may exit the listening state, and switch to the awake state with full sending and receiving capabilities, and then send the data. Alternatively, when a peer communication device, for example, an access point (access point, AP) of a WLAN, needs to send data to the STA, the AP may first send an initial control frame (initial control frame) to the STA. After receiving the initial control frame, the STA may exit the listening state, and switch to the awake state with full sending and receiving capabilities, and then receive the data. After the listening state is introduced, the STA may be in a state with low power consumption, and may be notified, in a timely manner by using an initial control frame, that there is data to be received, thereby maintaining a low data transmission delay.

Compared with the awake state, the listening state imposes limitations on the number of spatial streams sent and received by the STA, a bandwidth, a modulation and coding scheme (modulation and coding scheme, MCS), a physical protocol data unit (physical protocol data unit, PPDU) format, and the like, to achieve low power consumption. For example, in the listening state, the STA supports receiving only of a frame with a single spatial stream, a bandwidth of 20 megahertz (MHz), an MCS 0, and a non-high throughput (non-high throughput, non-HT) PPDU format. After switching to the awake state with full sending and receiving capabilities, the STA may support communication with more spatial streams, a larger bandwidth, a higher MCS, and a more advanced PPDU format.

After receiving the initial control frame, the STA usually needs to reply with an initial control response frame (initial control response frame) to the peer communication device (for example, the AP), to notify the peer communication device that the STA has exited the listening state. A frame end moment of the initial control frame and a frame start moment of the initial control response frame are separated by a short inter-frame space (short inter-frame space, SIFS) time. For state switching scenarios such as spatial stream transition and antenna switching, padding (padding) may be performed on the initial control frame at a medium access control (medium access control, MAC) layer, to reserve more time for the STA to perform state switching. However, when switching of the STA from the listening state to the awake state involves a change in a bandwidth size, communication frequency switching, or the like, the STA needs to verify that a frame check sequence (frame check sequence, FCS) in the initial control frame is correct before performing bandwidth or frequency adjustment. MAC padding cannot reserve more time for such switching, and the SIFS time is insufficient.

In a related technology, a solution in which a new FCS is added after indication information of the STA and before the MAC padding in the initial control frame is proposed. The new FCS may be referred to as FCS2, and the original FSC after the MAC padding in the initial control frame may be referred to as FCS1. In this solution, after receiving FCS2 and confirming correctness, the STA may immediately perform state switching without waiting to receive FCS1. A time period from the end of FCS2 to sending of the initial control response frame may be used by the STA to perform state switching, thereby reserving more time for the STA to perform state switching. For example, the STA may have more time to perform bandwidth or frequency adjustment.

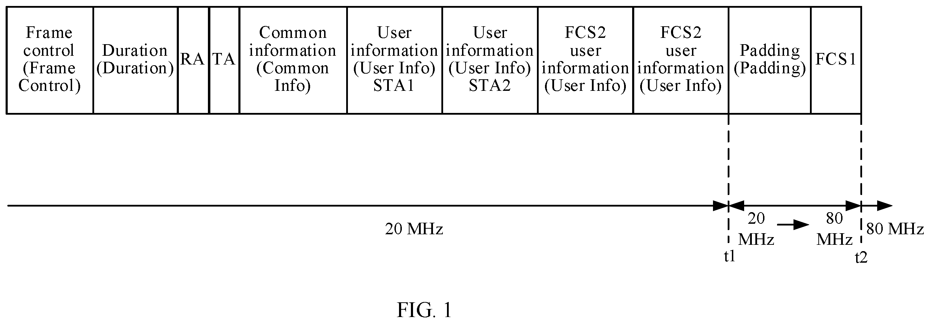

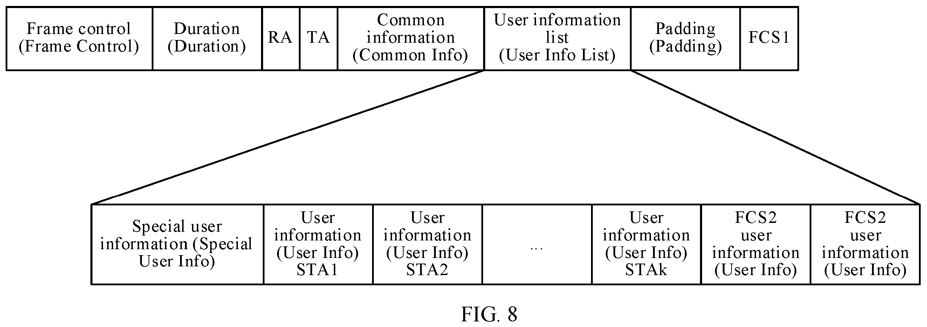

For example, a trigger frame is used as an initial control frame. FIG. 1 is a diagram of a structure of a trigger frame. As shown in FIG. 1, the trigger frame may include a frame control (Frame Control) field, a duration (Duration) field, a receiver address (receiver address, RA) field, a transmitter address (transmitter address, TA) field, a common information (Common Info) field, a user information (User Info) field, a padding (Padding) field, and FCS1. Optionally, the user information field further includes a special user information field, as shown in FIG. 8.

The User Info field includes User Info fields associated with/matching STAs such as STA1 and STA2, for example, referred to as User Info STA1 and User Info STA2. It should be understood that in FIG. 1, only STA1 and STA2 are used as examples. In other examples, the User Info field may alternatively include User Info fields associated with more or fewer STAs.

After the User Info field associated with the STA and before the Padding field, the User Info field further includes a User Info field that carries FCS2, for example, referred to as FCS2 User Info. For example, in FIG. 1, two User Info fields may be used to carry FCS2. The User Info field associated with the STA, the User Info field that carries FCS2, and the like may form a user information list (User Info List).

For the User Info field that carries FCS2, an association identifier (association identifier, AID) field in the User Info field may be set to a special value to identify FCS2 User Info. The AID is also denoted as AID12.

For the trigger frame shown in FIG. 1, the STA may analyze an AID12 field in each User Info field, to determine a location of FCS2. For example, a User Info field whose AID12 field is set to a special value carries FCS2. After receiving FCS2 and confirming correctness, the STA may immediately perform state switching without waiting to receive FCS1.

For example, still with reference to FIG. 1, a bandwidth of the STA in the listening state is 20 MHz, and a bandwidth after the listening state is exited is 80 MHz. After receiving FCS2, the STA may check content before FCS2 in the trigger frame, for example, the common information (Common Info) field and the user information (User Info) field, based on FCS2. After determining that FCS2 is correct, the STA may exit the listening state at a moment t1 shown in FIG. 1, and perform bandwidth switching from 20 MHz to 80 MHz. A time period from the end of FCS2 to the end of FCS1 may be used for bandwidth switching.

However, a process in which the STA continuously analyzes each User Info field to determine the location of the second FCS results in high power consumption and is complex to implement.

Therefore, this application provides a communication method. In the method, a second communication device may send a trigger frame to a first communication device, where the trigger frame includes a first field and a first user information field that carries a second frame check sequence, the first field includes a first indication field, and the first indication field indicates a location of the second frame check sequence. The first communication device may receive the trigger frame, and determine the location of the second frame check sequence based on the first indication field. The second frame check sequence may be FCS2 described above.

According to the method, a communication device (for example, the first communication device) that receives the trigger frame can easily and quickly locate the location of the second frame check sequence based on the first indication field, thereby greatly reducing power consumption of the first communication device.

For example, in the communication method, steps performed by the first communication device may be performed by the first communication device or an apparatus (for example, a chip) built in the first communication device, and steps performed by the second communication device may be performed by the second communication device or an apparatus (for example, a chip) built in the second communication device.

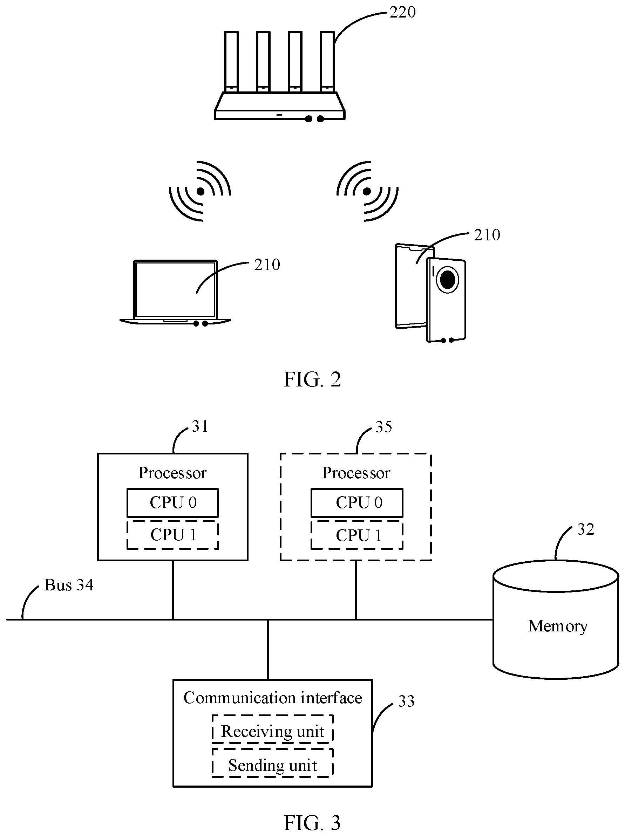

In some possible scenarios, the communication method may be applied to a wireless local area network (wireless local area network, WLAN) communication system. For example, FIG. 2 is a diagram of composition of a communication system according to an embodiment of this application. The communication method provided in embodiments of this application may be applied to the communication system shown in FIG. 2. The communication system shown in FIG. 2 may use a WLAN technology, for example, Wi-Fi. As shown in FIG. 2, the communication system may include a terminal device 210 in a WLAN and an access point (access point, AP) 220 of the WLAN.

For example, the AP 220 may serve as a central node of the WLAN, and can provide a wireless access service. The terminal device 210 may access the AP, to use a wireless service of the WLAN, for example, perform network access or send data.

The AP 220 may be referred to as a wireless access point, an access network device, a radio access network (radio access network, RAN) device, or the like. The AP 220 may include a wireless access point device, a radio network controller (radio network controller, RNC), a wireless fidelity (wireless fidelity, Wi-Fi) access point (access point, AP), a wireless relay node, a wireless backhaul node, a wireless router, a gateway, a Wi-Fi module (for example, a Wi-Fi chip), a wireless network adapter, or a mobile hotspot device (for example, a mobile hotspot device or a mobile router).

The terminal device 210 may also be referred to as user equipment (user equipment) or a STA. In some examples, the terminal device 210 may be an access terminal, a subscriber unit, a subscriber station, a mobile console, a mobile station (mobile station, MS), a remote station, a remote terminal, a mobile terminal (mobile terminal, MT), a user terminal, a wireless communication device, a user agent, a user apparatus, a target terminal, or the like. This is not limited herein.

The terminal device 210 may be a wireless terminal. The wireless terminal may be a device that provides voice and/or other service data connectivity to users, a handheld device with a wireless connection function, or another processing device connected to a wireless modem. For example, the terminal device 210 may be a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a wearable device, a terminal in a 5G mobile communication system, a terminal in a future evolved network, or the like.

Based on the communication system shown in FIG. 2, in some possible implementations, in the communication method, the first communication device may be a terminal device 210 in the WLAN, and the second communication device may be an AP 220 of the WLAN.

For example, the AP 220 may be connected to a network, a plurality of terminal devices 210 (for example, STAs) are associated with the AP 220, and the terminal device 210 accesses the network through the AP 220.

Optionally, the terminal device 210 may be a non-AP multi-link device (non-AP multi-link device, non-AP MLD) that supports a plurality of links, and the AP 220 may be an AP MLD that supports a plurality of links.

In some other possible implementations, in the communication method, the first communication device may be an AP 220 of the WLAN, and the second communication device may be a terminal device 210 in the WLAN.

In some other possible implementations, both the first communication device and the second communication device in the communication method may be APs 220 of the WLAN, or both may be terminal devices 210 in the WLAN.

Optionally, in some possible scenarios, some communication devices (for example, Wi-Fi chips) may serve as an AP 220 of the WLAN, and may serve as a terminal device 210 in the WLAN. In other words, this type of communication device may work in an AP mode, and may work in a STA mode. For example, the communication device may serve as a STA device to be connected to another AP device, and may serve as an AP device to allow another STA device to access. The two processes may be simultaneously performed. The first communication device and/or the second communication device in the communication method may be this type of communication device.

It should be understood that product forms or implementation forms of the first communication device and the second communication device are not limited in this application.

Optionally, the communication method provided in this application may also be applied to another wireless communication system, for example, a ZigBee communication system, a Bluetooth (Bluetooth) communication system, a radio frequency identification (radio frequency identification, RFID) communication system, or another future communication system. A type of a communication system to which the communication method is applicable is not limited in this application either.

For example, FIG. 3 is a diagram of composition of a communication device according to an embodiment of this application. The communication device may be the first communication device in this application, or may be the second communication device. As shown in FIG. 3, the communication device may include at least one processor 31, a memory 32, a communication interface 33, and a bus 34.

The processor 31 is a control center of the communication device, and may be one processor or may be a collective term for a plurality of processing elements. For example, the processor 31 may be a central processing unit (central processing unit, CPU), may be an application-specific integrated circuit (application-specific integrated circuit, ASIC), or may be one or more integrated circuits configured to implement embodiments of this application, for example, one or more microprocessors (digital signal processors, DSPs), or one or more field programmable gate arrays (field programmable gate arrays, FPGAs).

The processor 31 may perform various functions of the communication device by running or executing a software program stored in the memory 32 and invoking data stored in the memory 32, for example, may perform the steps performed by the first communication device or the second communication device in the communication method provided in embodiments of this application.

In a specific implementation, in an embodiment, the processor 31 may include one or more CPUs, for example, a CPU 0 and a CPU 1 shown in FIG. 3.

In a specific implementation, in an embodiment, the communication device may include a plurality of processors, for example, the processor 31 and a processor 35 shown in FIG. 3. Each of the processors may be a single-core processor (single-CPU), or may be a multi-core processor (multi-CPU). The processor herein may be one or more devices, circuits, and/or processing cores configured to process data (for example, computer program instructions).

The memory 32 may store a software program of the method steps performed by the communication device, and the processor 31 controls execution. The memory 32 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto.

The memory 32 may exist independently and be connected to the processor 31 through the bus 34. Alternatively, the memory 32 may be integrated with the processor 31. This is not limited herein.

The communication interface 33 is any apparatus such as a transceiver, and is configured to communicate with another device or a communication network. The communication interface 33 may include an Ethernet interface, a radio access network (radio access network, RAN) interface, a wireless local area network (wireless local area network, WLAN) interface, or the like. The communication interface 33 may include a receiving unit for implementing a receiving function and a sending unit for implementing a sending function.

The bus 34 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 3 for representation, but this does not mean that there is only one bus or only one type of bus.

Although the bus 34 is used in FIG. 3, it may be understood that the bus may be replaced with a connection relationship in another form, and is not limited to the bus.

Optionally, in embodiments of this application, the first communication device and/or the second communication device may include more or fewer components than those shown in FIG. 3. This is not limited herein.

The following provides example descriptions of the communication method provided in embodiments of this application. Processing described below as being performed by a single execution body may alternatively be performed by a plurality of execution bodies. These execution bodies may be logically and/or physically separated. It should be further understood that with evolution of a network architecture and emergence of a new service scenario, the technical solutions provided in embodiments of this application are also applicable to a similar technical problem.

It should be noted that in the descriptions of embodiments of this application, words such as "first" and "second" are merely used to distinguish between descriptions, and are not used to specially limit a feature. That is, "first" or "second" may include more content, and is not limited to a specific concept. The term "and/or" describes an association relationship between associated objects and indicates that three relationships may exist. For example, A and/or B may indicate the following three cases: Only A exists, both A and B exist, and only B exists. The character "/" usually indicates an "or" relationship between associated objects. "At least one" means one or more, and "a plurality of" means two or more. In embodiments of this application, only fewer steps than all steps may be performed, or more steps may be performed. This is not limited. "At least one of the following" or a similar expression thereof indicates any combination of listed items. For example, at least one of A, B, and (or) C may indicate the following cases: Only A exists, only B exists, only C exists, both A and B exist, both B and C exist, both A and C exist, and all of A, B, and C exist, where A, B, and C may be singular or plural.

Unless otherwise defined, all technical and scientific terms used in this specification have same meanings as those usually understood by a person skilled in the art to which this application pertains. Terms used in the specification of this application are merely used to describe specific embodiments, and are not intended to limit the application of the present invention.

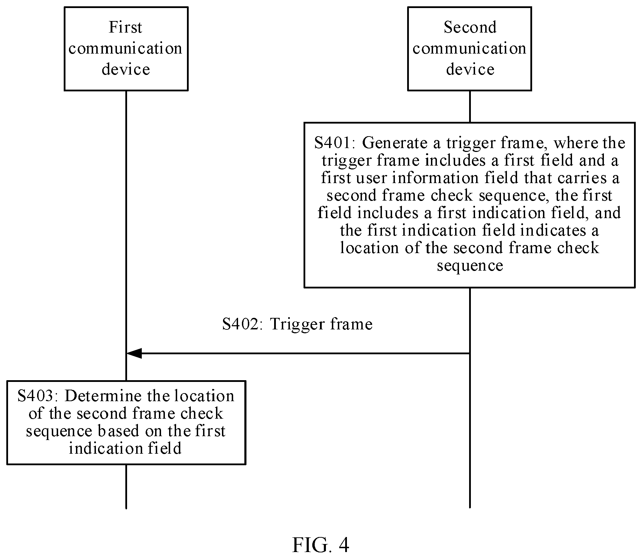

FIG. 4 is a schematic flowchart of a communication method according to an embodiment of this application. As shown in FIG. 4, the communication method may include S401 to S403.

For example, in the procedure shown in FIG. 4, steps performed by a first communication device may be specifically performed by the first communication device or an apparatus (for example, a chip) built in the first communication device, and steps performed by a second communication device may be specifically performed by the second communication device or an apparatus (for example, a chip) built in the second communication device.

S401: The second communication device generates a trigger frame, where the trigger frame includes a first field and a first user information field that carries a second frame check sequence, the first field includes a first indication field, and the first indication field indicates a location of the second frame check sequence.

For example, the second communication device is an AP, and the first communication device is a STA. When the AP needs to send downlink data, the AP may generate a trigger frame.

Optionally, the trigger frame may be of a multi-user request to send (multi-user request to send, MU-RTS) type, may be of a broadcast storm recovery protocol (broadcast storm recovery protocol, BSRP) type, or may be of another type. A type of the trigger frame is not limited in this application, and only the MU-RTS type is used as an example for description.

Optionally, in this embodiment of this application, the first communication device has a listening state. For a meaning of the listening state, refer to the foregoing descriptions. When the second communication device needs to send data to the first communication device, the second communication device may first send an initial control frame (initial control frame), to indicate the first communication device to exit the listening state, for example, switch to an awake state. The initial control frame may be a trigger frame. For example, the second communication device may perform S402.

S402: The second communication device sends the trigger frame.

Correspondingly, the first communication device may receive the trigger frame.

For example, the second communication device may send the trigger frame to one or more first communication devices.

Optionally, the trigger frame may be sent in a broadcast (beacon) manner. For example, a receiver address of the trigger frame may be a broadcast address. The first communication device may listen to the trigger frame.

Alternatively, the trigger frame may be sent in a unicast or multicast manner. This is not limited herein.

In this embodiment of this application, the trigger frame may include the first field and the first user information field. The first user information field carries the second frame check sequence. The frame check sequence may also be referred to as a frame check sequence. The first field includes the first indication field, and the first indication field may indicate the location of the second frame check sequence in the trigger frame. After receiving the trigger frame, the first communication device may quickly locate the location of the second frame check sequence based on the first indication field. For example, the first communication device may perform S403.

S403: The first communication device determines the location of the second frame check sequence based on the first indication field.

The first communication device quickly locates the location of the second frame check sequence based on the first indication field. This omits a process in which the first communication device analyzes an unnecessary user information field, and increases a speed of determining the second frame check sequence. It should be understood that the first field is before the first user information field.

Optionally, after determining the location of the second frame check sequence (for example, FCS2 described above), the first communication device may check content before the second frame check sequence in the trigger frame based on the second frame check sequence, and perform state switching after determining that the second frame check sequence is correct, for example, switching from the listening state to the awake state. For a switching process, refer to the foregoing descriptions. Details are not described again. After completing state switching, the first communication device may send/reply with an initial control response frame (initial control response frame) to the second communication device, to indicate that the first communication device has completed state switching. After receiving the initial control response frame, the second communication device may send data to the first communication device.

In the communication method, a communication device (for example, the first communication device) that receives the trigger frame can easily and quickly locate the location of the second frame check sequence. This greatly reduces power consumption of parsing the trigger frame by the communication device, increases a speed of determining the second frame check sequence or parsing the trigger frame by the communication device, and further reserves more time for the communication device to perform state switching.

Optionally, in this embodiment of this application, the first user information field is not at the end of the trigger frame. The first communication device may have more time to perform state switching.

For example, in a possible design, the trigger frame further includes a padding field and a first frame check sequence, the first user information field is before the padding field, and the first frame check sequence is after the padding field.

For example, with reference to FIG. 1, the second frame check sequence may be FCS2, and the first frame check sequence may be FCS1. The padding field is a padding field. A time period from the end of FCS2 to the end of FCS1 may be used by the first communication device to perform state switching.

Optionally, a length of the padding field may be a variable (variable). In some possible scenarios, the length of the padding field may be 0. Alternatively, the length of the padding field may not be 0. This is not limited herein. For example, when the length of the padding field is 0, it may be considered that the padding field does not exist. For another example, when the length of the padding field is not 0, the length of the padding field may be 2 bytes or more bytes.

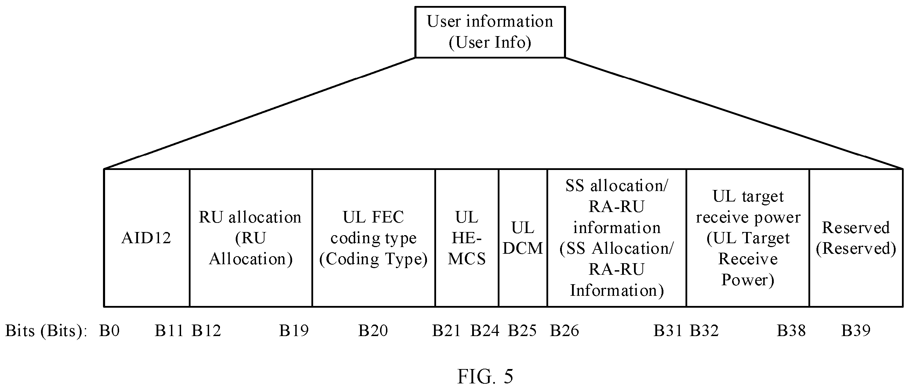

With reference to FIG. 1, in a possible implementation, a length of the second frame check sequence may be 4 bytes (32 bits), and the second frame check sequence may be carried in two User Info fields. For example, FIG. 5 is a diagram of a structure of a user information field according to an embodiment of this application. As shown in FIG. 5, the user information (User Info) field may include an AID12 field, a resource unit (resource unit, RU) allocation (Allocation) field, an uplink (uplink, UL) forward error correction (forward error correction, FEC) coding type (Coding Type) field, a UL high efficiency modulation and coding scheme (high efficiency modulation and coding scheme, HE-MCS) field, a UL dual carrier modulation (dual carrier modulation, DCM) field, a spatial stream (spatial stream, SS) allocation (Allocation)/RA-RU information (Information) field, a UL target receive power (Target Receive Power) field, and a reserved (Reserved) field.

The AID12 field may indicate a user (for example, a STA) that can access a current RU (an RU indicated in the RU Allocation field). The RU Allocation field may indicate a specific RU. The Reserved field is a reserved bit, and may serve as an extensible field. B0 indicates a 1^{st} bit, B1 indicates a 2^{nd} bit, and so on.

When the second frame check sequence is 4 bytes, 32 bits in B12 to B39 in two User Info fields may be used to carry the second frame check sequence. AID12 fields in the two User Info fields are set to specific values to indicate that the User Info fields are used to carry the second FCS.

In some other possible implementations, when the second frame check sequence is 4 bytes, one User Info field may be used to carry the second frame check sequence. Alternatively, the second frame check sequence may have another length, for example, 1 or 2 bytes, or 28 bits, and may be carried in one User Info field. For details, refer to descriptions in the following embodiments of this application.

In a possible design, the first field may be a common information (Common Info) field in the trigger frame. For a location of the Common Info field, refer to FIG. 1. Details are not described again.

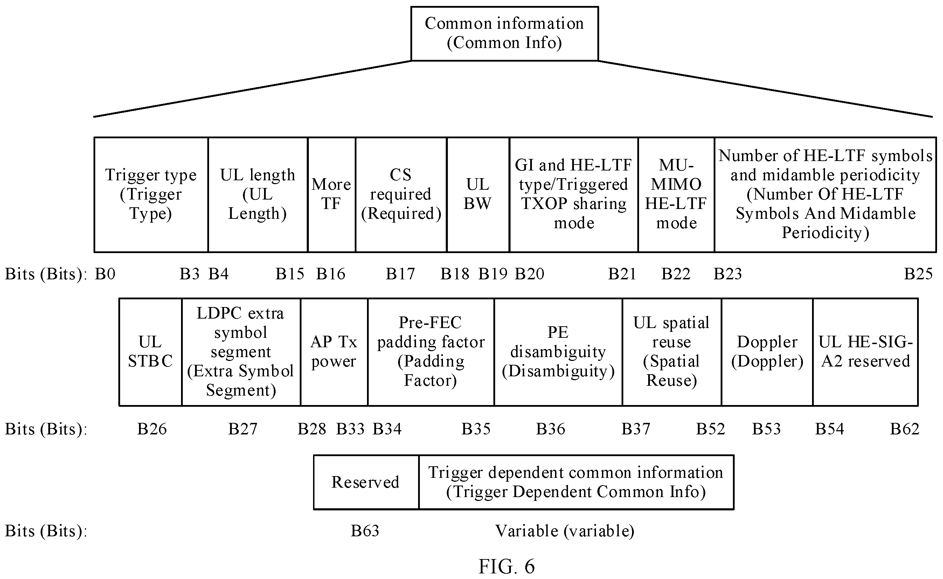

For example, the common information field may be of a high efficiency HE type. FIG. 6 is a diagram of a structure of an HE-type common information field according to an embodiment of this application.

As shown in FIG. 6, the HE-type Common Info field may include a trigger type (Trigger Type) field, a UL length (UL Length) field, a more trigger frame (more trigger frame, More TF) field, a carrier sense (carrier sense, CS) required (Required) field, a UL bandwidth (bandwidth, BW) field, a guard interval and high efficiency long training field (guard interval and high efficiency long training field, GI And HE-LTF Type)/triggered (Triggered) transmit opportunity (transmit opportunity, TXOP) sharing mode (Sharing Mode) field, a multi-user multiple-input multiple-output (MU multiple-input multiple-output, MU-MIMO) HE-LTF Mode field, a number of HE-LTF symbols and midamble periodicity (Number Of HE-LTF Symbols And Midamble Periodicity) field, a UL space-time block coding (space-time block coding, STBC) field, a low-density parity-check (low-density parity-check, LDPC) extra symbol segment (Extra Symbol Segment) field, an access point (access point, AP) Tx power (Power) field, a pre-forward error correction (Pre-FEC) padding factor (Padding Factor) field, a data packet extension (packet extension, PE) disambiguity (Disambiguity) field, a UL spatial reuse (Spatial Reuse) field, a Doppler (Doppler) field, a UL HE-signal (Signal, SIG)-A2 Reserved field, a Reserved field, and a trigger dependent (Trigger Dependent) Common Info field.

The Trigger Type field is carried in B0 to B3 and occupies 4 bits. The UL Length field is carried in B4 to B15 and occupies 12 bits. The More TF field is carried in B16 and occupies 1 bit. The CS Required field is carried in B17 and occupies 1 bit. The UL BW field is carried in B18 and B19 and occupies 2 bits. The GI And HE-LTF Type/Triggered TXOP Sharing Mode field is carried in B20 and B21 and occupies 2 bits. The MU-MIMO HE-LTF Mode field is carried in B22 and occupies 1 bit. The Number Of HE-LTF Symbols And Midamble Periodicity field is carried in B23 to B25 and occupies 3 bits.

The UL STBC field is carried in B26 and occupies 1 bit. The LDPC Extra Symbol Segment field is carried in B27 and occupies 1 bit. The AP Tx Power field is carried in B28 to B33 and occupies 6 bits. The Pre-FEC Padding Factor field is carried in B34 and B35 and occupies 2 bits. The PE Disambiguity field is carried in B36 and occupies 1 bit. The UL Spatial Reuse field is carried in B37 to B52 and occupies 16 bits. The Doppler field is carried in B53 and occupies 1 bit. The UL HE-SIG-A2 Reserved field is carried in B54 to B62 and occupies 9 bits.

The Reserved field is carried in B63 and occupies 1 bit. A length of the Trigger Dependent Common Info field is variable and is a variable (variable).

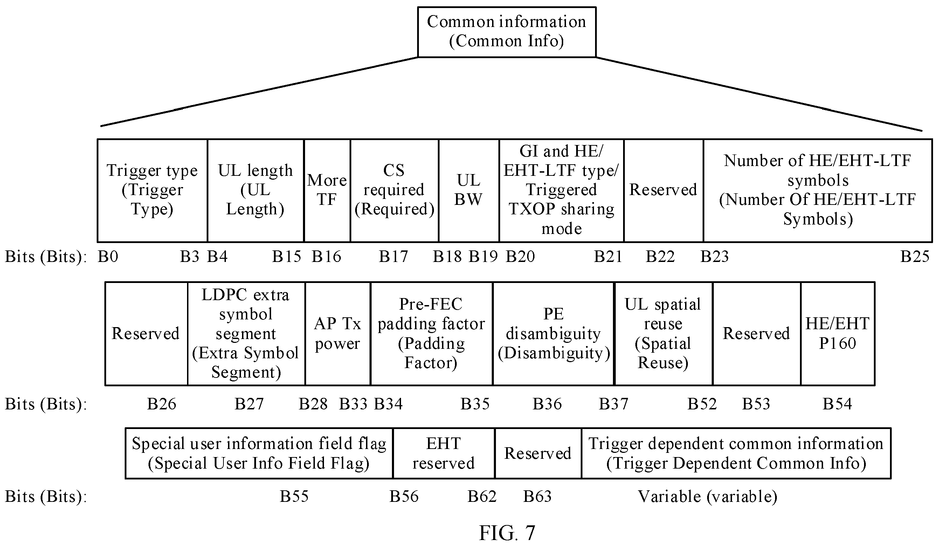

Alternatively, the common information field may be of an extremely high throughput (extremely high throughput, EHT) type. For example, FIG. 7 is a diagram of a structure of an EHT-type common information field according to an embodiment of this application.

As shown in FIG. 7, the EHT-type Common Info field may include a trigger type (Trigger Type) field, a UL length (UL Length) field, a more trigger frame (more trigger frame, More TF) field, a carrier sense (carrier sense, CS) required (Required) field, a UL bandwidth (bandwidth, BW) field, a guard interval and high efficiency/extremely high throughput long training field (guard interval and high efficiency/extremely high throughput long training field, GI And HE/EHT-LTF Type)/triggered (Triggered) transmit opportunity (transmit opportunity, TXOP) sharing mode (Sharing Mode) field, a 1^{st} Reserved field, a number of HE/EHT-LTF symbols (Number Of HE/EHT-LTF Symbols) field, a 2^{nd} Reserved field, a low-density parity-check (low-density parity-check, LDPC) extra symbol segment (Extra Symbol Segment) field, an access point (access point, AP) Tx power (Power) field, a pre-forward error correction (Pre-FEC) padding factor (Padding Factor) field, a data packet extension (packet extension, PE) disambiguity (Disambiguity) field, a UL spatial reuse (Spatial Reuse) field, a 3^{rd} Reserved field, an HE/EHT P160 field, a special user information field flag (Special User Info Field Flag) field, an EHT Reserved field, a 4^{th} Reserved field, and a trigger dependent (Trigger Dependent) Common Info field.

The Trigger Type field is carried in B0 to B3 and occupies 4 bits. The UL Length field is carried in B4 to B15 and occupies 12 bits. The More TF field is carried in B16 and occupies 1 bit. The CS Required field is carried in B17 and occupies 1 bit. The UL BW field is carried in B18 and B19 and occupies 2 bits. The GI And HE/EHT-LTF Type/Triggered TXOP Sharing Mode field is carried in B20 and B21 and occupies 2 bits. The 1^{st} Reserved field is carried in B22 and occupies 1 bit. The Number Of HE/EHT-LTF Symbols field is carried in B23 to B25 and occupies 3 bits.

The 2^{nd} Reserved field is carried in B26 and occupies 1 bit. The LDPC Extra Symbol Segment field is carried in B27 and occupies 1 bit. The AP Tx Power field is carried in B28 to B33 and occupies 6 bits. The Pre-FEC Padding Factor field is carried in B34 and B35 and occupies 2 bits. The PE Disambiguity field is carried in B36 and occupies 1 bit. The UL Spatial Reuse field is carried in B37 to B52 and occupies 16 bits. The 3^{rd} Reserved field is carried in B53 and occupies 1 bit. The HE/EHT P160 field is carried in B54 and occupies 1 bit.

The Special User Info Field Flag field is carried in B55 and occupies 1 bit. The EHT Reserved field is carried in B56 to B62 and occupies 7 bits. The 4^{th} Reserved field is carried in B63 and occupies 1 bit. A length of the Trigger Dependent Common Info field is variable and is a variable (variable).

Optionally, when both bits B54 and B55 in the Common Info field are set to 1, the Common Info field is an HE-type Common Info field. Otherwise, the Common Info field is an EHT-type Common Info field.

Optionally, when the first field is a Common Info field in the trigger frame, the first indication field may be carried in at least one of B4 to B15, B22 to B53, and B63 in the Common Info field.

For example, the HE-type Common Info field shown in FIG. 6 is used as an example. Currently, bits occupied by the following fields in the HE-type Common Info field are reserved bits: the UL Length field carried in B4 to B15, the MU-MIMO HE-LTF Mode field carried in B22, the Number Of HE-LTF Symbols And Midamble Periodicity field carried in B23 to B25, the UL STBC field carried in B26, the LDPC Extra Symbol Segment field carried in B27, the AP Tx Power field carried in B28 to B33, the Pre-FEC Padding Factor field carried in B34 and B35, the PE Disambiguity field carried in B36, the UL Spatial Reuse field carried in B37 to B52, the Doppler field carried in B53, the Reserved field carried in B63, and the like. In this embodiment of this application, at least one of reserved bits such as B4 to B15, B22 to B53, and B63 may be used to carry the first indication field. It should be understood that in this embodiment of this application, the bit that carries the first indication field is no longer used as a reserved bit.

Similarly, for the EHT-type Common Info field shown in FIG. 7, the first indication field may be carried in at least one of B4 to B15, B22 to B53, and B63 in the Common Info field, for example, 5 bits or 6 bits. Details are not described again.

In another possible design, the trigger frame may further include a special user information (Special User Info) field, and the first field may be a Special User Info field in the trigger frame. For example, in the IEEE 802.11be standard, the Special User Info field is introduced.

For example, FIG. 8 is a diagram of a structure of another trigger frame according to an embodiment of this application. As shown in FIG. 8, in this design, the trigger frame may include a frame control (Frame Control) field, a duration (Duration) field, a receiver address (receiver address, RA) field, a transmitter address (transmitter address, TA) field, a common information (Common Info) field, a user information list (User Info List), a padding (Padding) field, and FCS1.

The User Info List includes a Special User Info field, one or more User Info fields associated with/matching a STA (for example, User Info fields respectively associated with STA1 to STAk, where k is an integer greater than 0), and a User Info field that carries FCS2. For ease of description in this application, the User Info field that carries FCS2 may be referred to as a first user information field, and the User Info field associated with the STA may be referred to as a second user information field. The Special User Info field may also be referred to as a third user information field.

With reference to FIG. 8, it may be learned that a location of the Special User Info field may be immediately after the Common Info field.

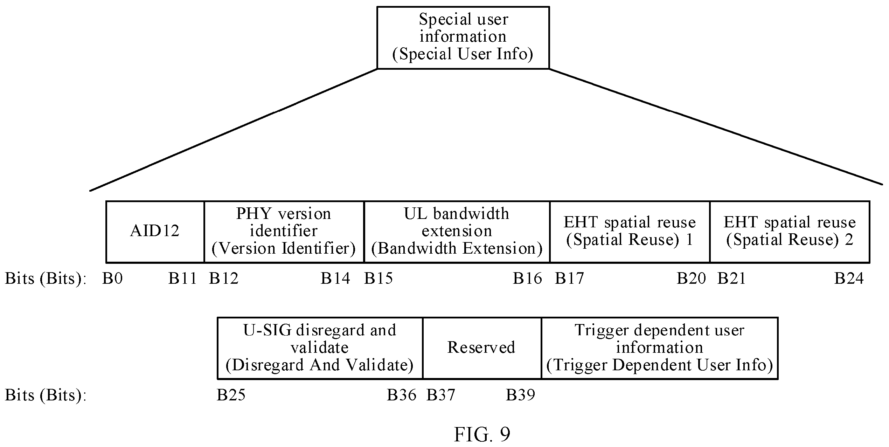

FIG. 9 is a diagram of a structure of a Special User Info field according to an embodiment of this application. As shown in FIG. 9, the Special User Info field may include an AID12 field, a PHY version identifier (Version Identifier) field, a UL bandwidth extension (Bandwidth Extension) field, an EHT spatial reuse (Spatial Reuse) 1 field, an EHT spatial reuse 2 field, a U-SIG disregard and validate (Disregard And Validate) field, a Reserved field, and a trigger dependent user information (Trigger Dependent User Info) field.

The AID12 field is carried in B0 to B11 and occupies 12 bits. The PHY Version Identifier field is carried in B12 to B14 and occupies 3 bits. The UL Bandwidth Extension field is carried in B15 and B16 and occupies 2 bit. The EHT Spatial Reuse 1 field is carried in B17 to B20 and occupies 4 bits. The EHT Spatial Reuse 2 field is carried in B21 to B24 and occupies 4 bits. The U-SIG Disregard And Validate field is carried in B25 to B36, and occupies 12 bits. The Reserved field is carried in B37 to B39, and occupies 3 bits.

In the Special User Info field, the AID12 field may be set to a special value to identify the Special User Info field. For example, the Special User Info field may be a User Info field whose AID12 field is set to 2007.

Optionally, when the first field is a Special User Info field in the trigger frame, the first indication field may be carried in at least one of B37 to B39 in the Special User Info field, for example, 3 bits.

For example, the Special User Info field shown in FIG. 9 is used as an example. Currently, B37 to B39 in the Special User Info field are reserved bits. In this embodiment of this application, at least one of reserved bits such as B37 to B39 may be used to carry the first indication field. It should be understood that in this embodiment of this application, the bit that carries the first indication field is no longer used as a reserved bit.

An implementation of the first field and a location of the first indication field in the first field are described in the foregoing embodiment. The following describes some possible designs in which the first indication field indicates the location of the second frame check sequence.

In a possible design, that the first indication field indicates the location of the second frame check sequence includes: the first indication field indicates a location of the first user information field.

For example, the location of the first user information field may mean a ranking of the first user information field. The first indication field may indicate the location of the first user information field by using a value.

Optionally, when the first user information field is one user information field, that is, when the second FCS is carried in one user information field, the first indication field indicates the location of the first user information field. When the first user information field is two user information fields, that is, when the second FCS is carried in two user information fields, the first indication field may indicate a location of a 1^{st} first user information field. When the first user information field is two user information fields, the two user information fields that carry the second FCS may be consecutive (as shown in FIG. 1 or FIG. 8).

For example, in an implementation, that the first indication field indicates the location of the first user information field includes: a value of the first indication field is n, indicating that the first user information field is an (n+1)^{th} or n^{th} user information field after the first field.

In this implementation, user information fields may be sequentially numbered, and the communication device (for example, the first communication device) may determine and obtain the ranking of the first user information field based on a value obtained by increasing the value of the first indication field by 1 or the value of the first indication field. Optionally, n is an integer greater than or equal to 0.

For example, an example in which two user information fields carry the second FCS is used. It is assumed that the two user information fields that carry the second FCS are a 5^{th} user information field and a 6^{th} user information field in all user information fields. For a scenario, similar to that shown in FIG. 1, in which the trigger frame does not include a special user information field, the first field may be a common information field, and the value of the first indication field may be 4. For example, the first indication field is represented as "0100", indicating that a 5^{th} user information field after the common information field carries the second FCS.

For a scenario, shown in FIG. 8, in which the trigger frame includes a special user information field, the first field may also be a common information field, and the value of the first indication field may be 4. For example, the first indication field is represented as "0100", indicating that a 5^{th} user information field after the common information field carries the second FCS. Alternatively, the first field may be a special user information field, and the value of the first indication field may be 3. For example, the first indication field is represented as "0011", indicating that a 4^{th} user information field after the special user information field carries the second FCS.

In another implementation, that the first indication field indicates the location of the first user information field includes: the first field is a common information field, and a value of the first indication field is n, indicating that the first user information field is an (n+1)^{th} or n^{th} user information field after a special user information field, where the special user information field is after the common information field. Optionally, as described above, the special user information field is adjacent to the common information field.

In this implementation, user information fields may also be sequentially numbered, and the communication device (for example, the first communication device) may determine and obtain the ranking of the first user information field based on a value obtained by increasing the value of the first indication field by 1 or the value of the first indication field. Optionally, n is an integer greater than or equal to 0.

For example, an example in which two user information fields carry the second FCS is still used. It is assumed that the two user information fields that carry the second FCS are a 5^{th} user information field and a 6^{th} user information field in all user information fields. For a scenario, shown in FIG. 8, in which the trigger frame includes a special user information field, the first field may also be a common information field, and the value of the first indication field may be 3. For example, the first indication field is represented as "0011", indicating that a 4^{th} user information field after the special user information field carries the second FCS.

In still another implementation, that the first indication field indicates the location of the first user information field includes: the first field is a special user information field, and a value of the first indication field is n, indicating that the first user information field is an (n+1)^{th} or n^{th} user information field after a common information field, where the special user information field is after the common information field.

In this implementation, user information fields may also be sequentially numbered, and the communication device (for example, the first communication device) may determine and obtain the ranking of the first user information field based on a value obtained by increasing the value of the first indication field by 1 or the value of the first indication field. Optionally, n is an integer greater than or equal to 0.

For example, an example in which two user information fields carry the second FCS is still used. It is assumed that the two user information fields that carry the second FCS are a 5^{th} user information field and a 6^{th} user information field in all user information fields. For a scenario, shown in FIG. 8, in which the trigger frame includes a special user information field, the first field may also be a special user information field, and the value of the first indication field may be 4. For example, the first indication field is represented as "0100", indicating that a 5^{th} user information field after the common information field carries the second FCS.

Optionally, in any one of the foregoing implementations, when the value of the first indication field is 0, it may indicate that the trigger frame does not include the second FCS or the second FCS does not exist. Alternatively, the value of the first indication field may be set to some special values to indicate that the second FCS does not exist.

Optionally, in this embodiment of this application, the first indication field may also be referred to as a second FCS location field. A length of the first indication field may be 4 bits, 6 bits, 8 bits, or the like, which may respectively indicate 16, 64, or 256 User Info fields. The length of the first indication field is not limited in this application.

In the foregoing design, the first indication field indicates the location of the second frame check sequence by indicating the location of the first user information field. In another possible design, the first indication field may specifically indicate a length of the padding field or the number of padding user fields, and the length of the padding field or the number of padding user fields is used to determine the location of the second frame check sequence. In another possible design, the first indication field may specifically indicate a length of the padding field plus 1 or the number of padding user fields plus 1, and the length of the padding field or the number of padding user fields is used to determine the location of the second frame check sequence.

For example, with reference to FIG. 1 or FIG. 8 and the foregoing descriptions, the first user information field that carries the second FCS is before the padding field, and the first FCS is after the padding field. A value of the first indication field may be equal to the length of the padding field or the number of padding user fields. When the first indication field indicates the length of the padding field, the communication device (for example, the first communication device) may obtain, through calculation based on the length of the padding field, a location of the first user information field that carries the second FCS. Alternatively, when the first indication field indicates the number of padding user fields, the communication device (for example, the first communication device) may obtain, through calculation based on the number of padding user fields, a location of the first user information field that carries the second FCS. For example, the communication device may subtract the length of the padding field and a length of the first FCS from a total length of the trigger frame (for example, an MU-RTS frame), to find the location of the first user information field that carries the second FCS. Optionally, when the value of the first indication field is 0, it may indicate that the trigger frame does not include the second FCS or the second FCS does not exist. Alternatively, the value of the first indication field may be set to some special values to indicate that the second FCS does not exist.

Optionally, in this design, a length of the first indication field may be 8 bits, 12 bits, 16 bits, or the like. The length of the first indication field is not limited in this application.

It should be understood that in this design, when the first user information field is one user information field, that is, when the second FCS is carried in one user information field, the communication device may determine the location of the first user information field based on the length of the padding field. When the first user information field is two user information fields, that is, when the second FCS is carried in two user information fields, the communication device may determine a location of a 2^{nd} first user information field based on the length of the padding field, and derive a location of a 1^{st} first user information field. For example, the two first user information fields are consecutive.

In still another possible design, the first indication field specifically indicates the number of bytes between the end of the first field and the second frame check sequence, and the number of bytes is used to determine the location of the second frame check sequence.

For example, for a scenario, similar to that shown in FIG. 1, in which the trigger frame does not include a special user information field, the first field may be a common information field, and a value of the first indication field may be the number of bytes between the end of the common information field and the second frame check sequence or the number of bytes plus 1 *the number of unit bytes. The communication device (for example, the first communication device) may quickly determine the location of the second frame check sequence based on the number of bytes between the end of the common information field and the second frame check sequence. When the value of the first indication field is 0, it may indicate that the trigger frame does not include the second FCS or the second FCS does not exist. Alternatively, the value of the first indication field may be set to some special values to indicate that the second FCS does not exist.

For a scenario, shown in FIG. 8, in which the trigger frame includes a special user information field, the first field may also be a common information field, and a value of the first indication field may be the number of bytes between the end of the common information field and the second frame check sequence or the number of bytes plus 1*the number of unit bytes. Alternatively, the first field may be a special user information field, and a value of the first indication field may be the number of bytes between the end of the special user information field and the second frame check sequence or the number of bytes plus 1 *the number of unit bytes.

It should be understood that in this design, the number of bytes between the end of the first field and the second frame check sequence is the number of bytes between the end of the first field and a start location of the second frame check sequence.

In still another possible design, the first indication field specifically indicates the number of bytes occupied by a user information field before the first user information field, and the number of bytes is used to determine the location of the second frame check sequence.

For example, for a scenario, similar to that shown in FIG. 1, in which the trigger frame does not include a special user information field, the first field may be a common information field, and a value of the first indication field may be the number of bytes occupied by the user information field (for example, a user information field associated with a STA) before the first user information field or the number of bytes plus 1*the number of unit bytes. The communication device (for example, the first communication device) may quickly determine a location of the first user information field based on the number of bytes occupied by the user information field before the first user information field, and then determine the location of the second frame check sequence.

For a scenario, shown in FIG. 8, in which the trigger frame includes a special user information field, the first field may also be a common information field, and a value of the first indication field may be the number of bytes occupied by the user information field (for example, a special user information field and a user information field associated with a STA) before the first user information field or the number of bytes plus 1*the number of unit bytes. Alternatively, the first field may be a special user information field, and a value of the first indication field may be the number of bytes occupied by the user information field (for example, a special user information field and a user information field associated with a STA) before the first user information field or the number of bytes plus 1*the number of unit bytes.

It should be understood that in this design, when the first user information field is one user information field, that is, when the second FCS is carried in one user information field, the number of bytes occupied by the user information field before the first user information field is the number of bytes occupied by the user information field before the first user information field. When the first user information field is two user information fields, that is, when the second FCS is carried in two user information fields, the number of bytes occupied by the user information field before the first user information field is the number of bytes occupied by a user information field before a 1^{st} first user information field.

Optionally, the first indication field may alternatively indicate the number of bytes occupied by a second user information field before the first user information field, and the number of bytes is used to determine the location of the second frame check sequence. A principle is similar. Details are not described again.

In still another possible design, the first indication field specifically indicates the number of bytes occupied by a user information field and a common information field that are before the first user information field or the number of bytes plus 1 *the number of unit bytes, and the number of bytes is used to determine the location of the second frame check sequence.

For example, for a scenario, similar to that shown in FIG. 1, in which the trigger frame does not include a special user information field, the first field may be a common information field, and a value of the first indication field may be the number of bytes occupied by the user information field (for example, a user information field associated with a STA) and the common information field that are before the first user information field or the number of bytes plus 1 *the number of unit bytes. The communication device (for example, the first communication device) may quickly determine a location of the first user information field based on the number of bytes occupied by the user information field and the common information field that are before the first user information field or the number of bytes plus 1 *the number of unit bytes, and then determine the location of the second frame check sequence.

For a scenario, shown in FIG. 8, in which the trigger frame includes a special user information field, the first field may also be a common information field, and a value of the first indication field may be the number of bytes occupied by the user information field (for example, a special user information field and a user information field associated with a STA) and the common information field that are before the first user information field or the number of bytes plus 1*the number of unit bytes. Alternatively, the first field may be a special user information field, and a value of the first indication field may be the number of bytes occupied by the user information field (for example, a special user information field and a user information field associated with a STA) and the common information field that are before the first user information field or the number of bytes plus 1 *the number of unit bytes.

It should be understood that in this design, when the first user information field is one user information field, that is, when the second FCS is carried in one user information field, the number of bytes occupied by the user information field and the common information field that are before the first user information field is the number of bytes occupied by the user information field and the common information field that are before the first user information field. When the first user information field is two user information fields, that is, when the second FCS is carried in two user information fields, the number of bytes occupied by the user information field and the common information field that are before the first user information field is the number of bytes occupied by a user information field and a common information field that are before a 1^{st} first user information field.

In still another possible design, the first indication field specifically indicates the number of bytes occupied by a field between the second frame check sequence and the first frame check sequence or the number of bytes plus 1 *the number of unit bytes, and the number of bytes is used to determine the location of the second frame check sequence. Alternatively, the first indication field specifically indicates the number of bytes occupied by a field between the first user information field and the first frame check sequence or the number of bytes plus 1 *the number of unit bytes, and the number of bytes is used to determine the location of the second frame check sequence.

In this design, the communication device may also quickly determine the location of the second frame check sequence based on the number of bytes occupied by the field between the second frame check sequence and the first frame check sequence or the number of bytes occupied by the field between the first user information field and the first frame check sequence. A specific principle is similar to the foregoing design. Details are not described again.

Optionally, in a design in which the first indication field indicates a length of the padding field or the number of bytes of another field, a value of the first indication field may be decreased based on the number of unit bits or unit bytes.

For example, when the first indication field indicates the length of the padding field, the length of the padding field may be exactly divided based on the number of unit bit/byte (for example, 16 bits or 2 bytes), and a value obtained after the exact division is used as the value of the first indication field. Optionally, the number of unit byte may alternatively be another value such as 4 bytes or 6 bytes. This is not limited herein.

For another example, when the first indication field indicates the number of bytes between the end of the first field and the second frame check sequence, indicates the number of bytes occupied by a user information field before the first user information field, indicates the number of bytes occupied by a user information field and a common information field that are before the first user information field, indicates the number of bytes occupied by a field between the second frame check sequence and the first frame check sequence, or indicates the number of bytes occupied by a field between the first user information field and the first frame check sequence, the number of bytes may be exactly divided based on the number of unit bytes, and a value obtained after the exact division is used as the value of the first indication field. Optionally, the number of unit bytes may alternatively be 5 bytes, 10 bytes, or the like. This is not limited herein.

The value of the first indication field is decreased based on the number of unit bits or unit bytes, so that bits occupied by the first indication field can be reduced, thereby reducing signaling overheads.

Optionally, in the foregoing embodiment, an example in which the trigger frame indicates the first communication device to exit the listening state is used to provide example descriptions. In some other embodiments, the communication device may further define more states. The communication method provided in this embodiment of this application may be applied to any possible scenario in which the communication device is indicated, by using the trigger frame, to perform state switching or another operation. This is not limited herein. For example, the first communication device listens to the trigger frame in a first state. The trigger frame indicates the first communication device to switch from the first state to a second state. A communication capability of the first communication device in the first state is different from that in the second state. For example, the communication capability of the first communication device in the second state is greater than the communication capability in the first state. The second communication device may send the trigger frame as an initial control frame. After receiving the second frame check sequence and confirming correctness, the first communication device may switch from the first state to the second state. After completing state switching, the first communication device may reply with an initial control response frame to the second communication device.

For example, the first state may be the listening state, and the second state may be the awake state.

In the communication method in the foregoing embodiment, the second communication device may send the trigger frame, where the trigger frame may indicate the location of the second frame check sequence by using the first indication field, so that the first communication device easily and quickly locates the location of the second frame check sequence based on the first indication field, thereby reducing power consumption of the first communication device.

An embodiment of this application further provides a communication method. In the communication method, a second frame check sequence is carried in one first user information field. When a communication device (for example, a first communication device) that receives a trigger frame parses the trigger frame, parsing time can be reduced, and the second frame check sequence can be quickly determined. This reduces power consumption of parsing the trigger frame by the communication device, increases a speed of determining the second frame check sequence or parsing the trigger frame by the communication device, and further reserves more time for the communication device to perform state switching.

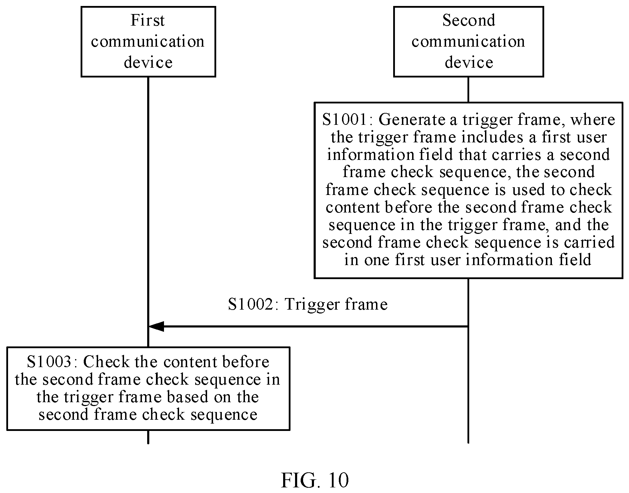

For example, FIG. 10 is another schematic flowchart of a communication method according to an embodiment of this application. As shown in FIG. 10, the communication method may include S1001 to S1003.

In the procedure shown in FIG. 10, steps performed by a first communication device may be specifically performed by the first communication device or an apparatus (for example, a chip) built in the first communication device, and steps performed by a second communication device may be specifically performed by the second communication device or an apparatus (for example, a chip) built in the second communication device.

S1001: The second communication device generates a trigger frame, where the trigger frame includes a first user information field that carries a second frame check sequence, the second frame check sequence is used to check content before the second frame check sequence in the trigger frame, and the second frame check sequence is carried in one first user information field.

Optionally, the trigger frame may be of a multi-user request to send (multi-user request to send, MU-RTS) type, may be of a broadcast storm recovery protocol (broadcast storm recovery protocol, BSRP) type, or may be of another type. A type of the trigger frame is not limited in this application, and only the MU-RTS type is used as an example for description.

S1002: The second communication device sends the trigger frame.

Correspondingly, the first communication device may receive the trigger frame.

For S1001 and S1002, refer to the foregoing descriptions of S401 and S402. Same parts are not described again. A difference lies in that in this embodiment, the trigger frame may include the first user information field. The first user information field carries the second frame check sequence, and the second frame check sequence is carried in one first user information field.

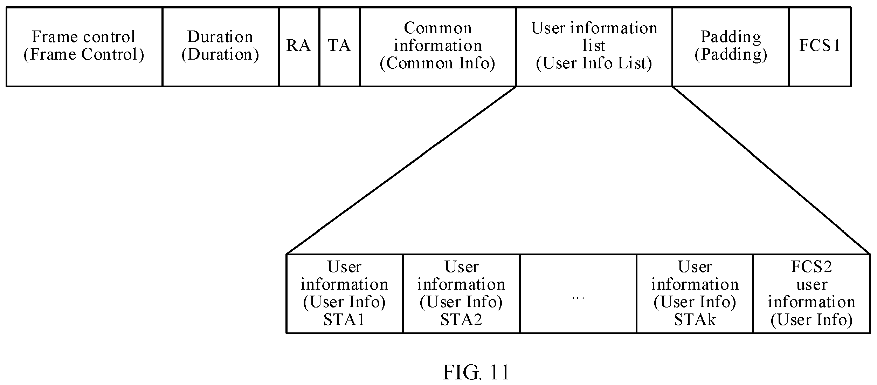

For example, FIG. 11 is a diagram of a structure of still another trigger frame according to an embodiment of this application. As shown in FIG. 11, the trigger frame may include a frame control (Frame Control) field, a duration (Duration) field, a receiver address (receiver address, RA) field, a transmitter address (transmitter address, TA) field, a common information (Common Info) field, a user information list (User Info List), a padding (Padding) field, and FCS1.

The User Info List includes one or more User Info fields associated with/matching a STA (for example, User Info fields respectively associated with STA1 to STAk, where k is an integer greater than 0), and a User Info field that carries FCS2. For ease of description in this application, the User Info field that carries FCS2 may be referred to as a first user information field, and the User Info field associated with the STA may be referred to as a second user information field.

With reference to FIG. 11, it may be learned that in this embodiment, FCS2 may be carried in one first user information field.

Optionally, similar to the foregoing embodiment, in some possible scenarios, in the trigger frame shown in FIG. 11, the User Info List may further include a Special User Info field. Details are not described herein again.

After receiving the trigger frame, the first communication device may check the content before the second frame check sequence in the trigger frame based on the second frame check sequence. For example, the first communication device may perform S1003.

S1003: The first communication device checks the content before the second frame check sequence in the trigger frame based on the second frame check sequence.

For example, the first communication device may check a common information (Common Info) field, a user information field that matches the first communication device, and the like based on the second frame check sequence.

In some possible scenarios, the trigger frame may serve as an initial control frame, to indicate the first communication device to perform state switching. After determining that the second frame check sequence is correct, the first communication device may perform state switching, for example, switching from a listening state to an awake state. For a switching process, refer to the foregoing descriptions. Details are not described again. After completing state switching, the first communication device may send/reply with an initial control response frame (initial control response frame) to the second communication device, to indicate that the first communication device has completed state switching. After receiving the initial control response frame, the second communication device may send data to the first communication device.

In the communication method, the second frame check sequence is carried in one first user information field, so that a communication device can reduce time in parsing the trigger frame. For example, the second FCS can be obtained by parsing only one first user information field. This reduces power consumption of parsing the trigger frame by the communication device, increases a speed of determining the second frame check sequence or parsing the trigger frame by the communication device, and further reserves more time for the communication device to perform state switching. In addition, signaling overheads can be reduced in the communication method.

The following describes some possible designs in which the second frame check sequence is carried in one first user information field in the communication method.

In a possible design, the second frame check sequence occupies 4 bytes, and the first user information field includes an association identifier (AID12) field and a non-association identifier field. The second frame check sequence is carried in bits in the association identifier field and the non-association identifier field, and the second frame check sequence occupies at least 4 bits in the association identifier field.

Optionally, for an implementation in which the second frame check sequence occupies 4 bytes, refer to the "IEEE Std 802.11-2020 standard document", for example, descriptions in "9.2.4.8 (FCS field)".

For example, when the second frame check sequence occupies a length of 4 bytes (that is, 32 bits), a part of bits in an AID12 field in a user information field may be used together with a bit in the non-association identifier field to carry the second frame check sequence, so as to carry the second frame check sequence in one user information field.

For example, with reference to FIG. 5, the user information (User Info) field may include an AID 12 field, an RU Allocation field, a UL FEC Coding Type field, a UL HE-MCS field, a UL DCM field, an SS Allocation/RA-RU Information field, a UL Target Receive Power field, and a Reserved field. A field other than the AID12 field may be referred to as a non-association identifier field. The AID12 field occupies a total of 12 bits of B0 to B11, and the non-association identifier field occupies a total of 28 bits of B12 to B39.

In this design, at least 4 bits in the AID12 field may be used to carry a part of the second frame check sequence, and a remaining part of the second frame check sequence is carried in a bit in B12 to B39.

In some possible scenarios of this design, B11 in the association identifier field is 1, and B0 to B10 in the association identifier field are not all 1s.

For example, Table 1 shows a value rule of the AID12 field.

**Table 1**

| AID12 value | Description/Condition |
|---|---|
| 0 | The user information field allocates one or more consecutive RA-RUs to a STA |
| 1 to 2007 | When the user information field points to an associated STA, the AID12 value is a value in 1 to 2007 |
| 2008 to 2044 | Reserved values |
| 2045 | The user information field allocates one or more consecutive RA-RUs to an unassociated STA |
| 2046 | Unallocated RU |
| 2047 to 4094 | Reserved values |
| 4095 | Start of a padding field |

As shown in Table 1, a most significant bit (most significant bit, MSB), namely, B11, in the AID 12 field is set to 0 in all cases except when the field is used for padding (Padding). When AID12 is used for padding, the value is 4095, that is, all 12 bits (B0 to B11) are set to 1.

When the second frame check sequence is carried in bits in the AID12 field and the non-association identifier field, and the second frame check sequence occupies at least 4 bits in the AID12 field, B11 in the AID12 field is set to 1, and B0 to B10 in the association identifier field are set to non-all-ones values, so that consideration of the user information field that carries the second frame check sequence as a start of Padding can be avoided, and duplication with an AID of any associated STA can be avoided.

For example, in an implementation, B0 to B3 in the association identifier field and B12 to B39 in the non-association identifier field carry the second frame check sequence. In the association identifier field, B4 to B10 are non-all-ones values, and B11 is 1.

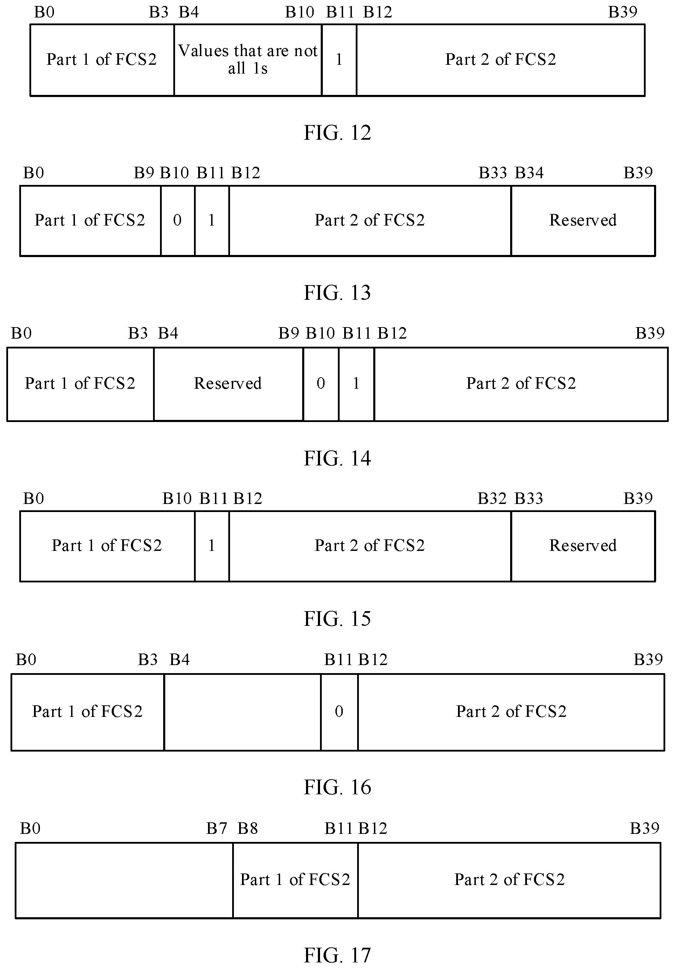

For example, FIG. 12 is a diagram of a structure of a first user information field that carries a second frame check sequence according to an embodiment of this application. As shown in FIG. 12, FCS2 is the second frame check sequence. FCS2 may include two parts: a part 1 (FCS2-part1) and a part 2 (FCS2-part2).

The part 1 of FCS2 is carried in a total of 4 bits of B0 to B3 in the AID12 field, and the part 2 of FCS2 is carried in a total of 28 bits of B12 to B39 in the non-AID 12 field. B4 to B10 in the AID12 field are non-all-ones values (not all 1s), and B11 in the AID12 field is 1.

For example, in this implementation, in the association identifier field, B11=1, and B10 to B4 may be a binary value 0000000, or B10 to B4 may be a binary value 1111110. Alternatively, B10 to B4 may be other binary non-all-ones values, which are not listed one by one.

In this implementation, the second frame check sequence occupies a 4-bit AID12 field, equivalent to occupying 16 AID12 values. The communication device (for example, the first communication device) that receives the trigger frame may determine, based on B11=1 and B4 to B10 that are non-all-ones values in the user information field, a location of the user information field that carries the second frame check sequence, that is, determine that the user information field is the first user information field.

Optionally, in this implementation, B4 to B10 in the AID12 field may be specific non-all-ones values. The communication device (for example, the first communication device) that receives the trigger frame may determine, based on B11=1 and B4 to B10 that are specific non-all-ones values in the user information field, a location of the user information field that carries the second frame check sequence. B4 to B10 that are specific non-all-ones values can increase a speed of determining, by the communication device, the location of the user information field that carries the second frame check sequence.

In another implementation, B0 to B9 in the association identifier field and B12 to B33 in the non-association identifier field carry the second frame check sequence. In the association identifier field, B10 is 0, and B11 is 1.

For example, FIG. 13 is a diagram of a structure of another first user information field that carries a second frame check sequence according to an embodiment of this application. As shown in FIG. 13, FCS2 is the second frame check sequence. FCS2 may include two parts: a part 1 (FCS2-part1) and a part 2 (FCS2-part2).

The part 1 of FCS2 is carried in a total of 10 bits of B0 to B9 in the AID12 field, and the part 2 of FCS2 is carried in a total of 22 bits of B12 to B33 in the non-AID 12 field. B10 in the AID12 field is 0, and B11 in the AID12 field is 1. B34 to B39 in the non-AID12 field are reserved bits.

In this implementation, the communication device (for example, the first communication device) that receives the trigger frame may determine, based on B11=1 and B10=0 in the user information field, a location of the user information field that carries the second frame check sequence, that is, determine that the user information field is the first user information field. The second frame check sequence occupies a 10-bit AID12 field, so that a location of the second frame check sequence can be further forward. In this way, the communication device (for example, the first communication device) that receives the trigger frame can perform frame check by using the second frame check sequence as early as possible, thereby reducing power consumption and completing state switching as early as possible.

In still another implementation, B0 to B3 in the association identifier field and B12 to B39 in the non-association identifier field carry the second frame check sequence. In the association identifier field, B10 is 0, and B11 is 1.

For example, FIG. 14 is a diagram of a structure of still another first user information field that carries a second frame check sequence according to an embodiment of this application. As shown in FIG. 14, FCS2 is the second frame check sequence. FCS2 may include two parts: a part 1 (FCS2-part1) and a part 2 (FCS2-part2).

The part 1 of FCS2 is carried in a total of 4 bits of B0 to B3 in the AID12 field, and the part 2 of FCS2 is carried in a total of 28 bits of B12 to B39 in the non-AID12 field. B10 in the AID12 field is 0, and B11 in the AID12 field is 1. B4 to B9 in the AID12 field are reserved bits.

In this implementation, the communication device (for example, the first communication device) that receives the trigger frame may determine, based on B11=1 and B10=0 in the user information field, a location of the user information field that carries the second frame check sequence, that is, determine that the user information field is the first user information field.

Optionally, in this implementation, B4 to B9 in the AID12 field may alternatively be set to specific values or any values. This is not limited herein.

The foregoing describes some possible implementations in which in the AID12 field, B11 is 1 and B0 to B10 are not all 1s when at least 4 bits in the AID12 field are used to carry a part of the second frame check sequence. It should be understood that the foregoing condition may be met in more implementations in this application. This is not limited in this application.

In some other possible scenarios, when at least 4 bits in the AID12 field are used to carry a part of the second frame check sequence, there may be no limitation that B0 to B10 are not all 1s.

For example, in a possible implementation, B0 to B10 in the association identifier field and B12 to B32 in the non-association identifier field carry the second frame check sequence. B11 in the association identifier field is 1.

For example, FIG. 15 is a diagram of a structure of still another first user information field that carries a second frame check sequence according to an embodiment of this application. As shown in FIG. 15, FCS2 is the second frame check sequence. FCS2 may include two parts: a part 1 (FCS2-part1) and a part 2 (FCS2-part2).

The part 1 of FCS2 is carried in a total of 11 bits of B0 to B10 in the AID12 field, and the part 2 of FCS2 is carried in a total of 21 bits of B12 to B32 in the non-AID 12 field. B11 in the AID12 field is 1. B33 to B39 in the non-AID12 field are reserved bits.

In this implementation, the second frame check sequence occupies an 11-bit AID12 field, so that a location of the second frame check sequence can be further forward. In this way, the communication device (for example, the first communication device) that receives the trigger frame can perform frame check by using the second frame check sequence as early as possible, thereby reducing power consumption and completing state switching as early as possible.

Different from the foregoing implementation in which in the AID12 field, B11 is 1 and B0 to B10 are not all 1s, in this implementation, when B0 to B10 are all 1s, a conflict with a start of a padding field may occur, and the communication device (for example, the first communication device) that receives the trigger frame cannot determine whether it is a user information field that carries the second frame check sequence or the start of the padding field. In this implementation, this problem may be resolved by indicating the location of the second frame check sequence. For example, in this implementation, the trigger frame further includes a first field, the first field includes a first indication field, and the first indication field indicates a location of the second frame check sequence. The method further includes: The first communication device determines the location of the second frame check sequence based on the first indication field.

Optionally, for a specific manner of indicating the location of the second frame check sequence, refer to the descriptions in the foregoing embodiment. Details are not described again.

The foregoing describes an implementation of an implementation scenario in which "B11 is 1 and B0 to B10 are not all 1s" or an implementation scenario in which "B11 is 1 and there is no limitation that B0 to B10 are not all 1s" when the second frame check sequence occupies 4 bytes, and at least 4 bits in the AID12 field are used to carry a part of the second frame check sequence.

Optionally, in some other possible scenarios, when the second frame check sequence occupies 4 bytes, and at least 4 bits in the AID12 field are used to carry a part of the second frame check sequence, B0 to B3 (4 bits) in the AID12 field and B12 to B39 (28 bits) in the non-association identifier field may be used to carry the second frame check sequence. 8 most significant bits (B4 to B11) in the AID12 field (namely, a part of bits in AID12) may be set to a special value, and a STA (receiving station) may identify, based on the special value, that the user information field carries the second frame check sequence.

It should be understood that because B4 to B11 are a part of the AID12 field, when B4 to B11 are set to a special value, the selected special value needs to avoid a problem that a legacy (legacy) station identifies the AID 12 field as an allocated value and consequently misinterpretation is caused. The following describes some implementations of setting B4 to B11 to a special value in this scenario.

For example, with reference to Table 1, which shows the value rule of the AID12 field.

With reference to Table 1, currently used values of the AID12 field are classified into the following five cases:
(1) 0: An RU corresponding to the User Info field is allocated to an associated station for uplink OFDMA random access (uplink OFDMA random access, UORA), where OFDMA means orthogonal frequency division multiple access (orthogonal frequency division multiple access).
(2) 1-2006: The values are allocated to an associated station as an AID.
(3) 2007: A pre-EHT AP allocates this value to an associated station as an AID. An EHT AP is not allowed to allocate this value to an associated station as an AID, but uses a corresponding User Info field as a special User Info field to carry common signaling.
(4) 2045: An RU corresponding to the User Info field is allocated to an unassociated station for uplink OFDMA random access (UORA).
(5) 2046: An RU corresponding to the User Info field is an unallocated RU.

Based on the cases of the used values of the AID12 field, although some AID12 values are defined in the standard, if the AP does not support or use these AID12 values, values of B4 to B11 corresponding to these AID12 values may still be used as special values to indicate that the user information field carries the second frame check sequence, to avoid misinterpretation.

When a total of 4 bits of B0 to B3 in the AID12 field are used to carry a part of the second frame check sequence, values of the 4 bits of B0 to B3 cannot be fixed, and 16 AID12 values are occupied. In this scenario, values of B4 to B11 corresponding to the 16 AID12 values may be used as special values to indicate that the user information field carries the second frame check sequence.

For example, in a possible implementation, the second frame check sequence occupies 4 bytes, B0 to B3 (4 bits) in the AID12 field and B12 to B39 (28 bits) in the non-association identifier field carry the second frame check sequence, the AID12 field occupies 16 consecutive values of 0 to 15, and a binary value of B11 to B4 in the AID12 field is 00000000. In other words, in this manner, the binary value of B11 to B4 in the AID12 field may be set to a special value 00000000, to indicate that the user information field carries the second frame check sequence.

In this implementation, the AP cannot allocate the occupied AID12 values of 1 to 15 to any associated station, and no associated station mistakenly considers that a User Info field corresponding to the value corresponds to the station. In addition, in this implementation, the AP does not support UORA, which can prevent an associated station from mistakenly considering an RU corresponding to AID12=0 as being available for UORA.

Optionally, in this implementation, when the binary value of B11 to B4 in the AID12 field is set to the special value 00000000, it may further specifically indicate that in the user information field, B0 to B3 (4 bits) in the AID12 field and B12 to B39 (28 bits) in the non-association identifier field carry the second frame check sequence.

In another possible implementation, the second frame check sequence occupies 4 bytes, B0 to B3 (4 bits) in the AID12 field and B12 to B39 (28 bits) in the non-association identifier field carry the second frame check sequence, the AID12 field occupies 16 consecutive values in 16 to 1999, and a binary value range of B11 to B4 in the AID12 field is 00000001 to 01111100. In other words, in this manner, a binary value of B11 to B4 in the AID12 field may be set to a special value in the range of 00000001 to 01111100, to indicate that the user information field carries the second frame check sequence.

In this implementation, the AP cannot allocate the occupied AID12 value to any associated station, and no associated station mistakenly considers that a User Info field corresponding to the value corresponds to the station.

Optionally, in this implementation, when the binary value of B11 to B4 in the AID12 field is set to a special value in the binary value range of 00000001 to 01111100, it may further specifically indicate that in the user information field, B0 to B3 (4 bits) in the AID12 field and B12 to B39 (28 bits) in the non-association identifier field carry the second frame check sequence.

For example, when a binary value 01111100 is selected for B11 to B4, an occupied AID12 value range is 1984 to 1999 (decimal), and the receiving station may learn, based on the binary value 01111100 of B11 to B4, that in the user information field, B0 to B3 (4 bits) in the AID12 field and B12 to B39 (28 bits) in the non-association identifier field carry the second frame check sequence. In this example case, the AP cannot allocate any AID12 value in 1984 to 1999 to any associated station.

In still another possible implementation, the second frame check sequence occupies 4 bytes, B0 to B3 (4 bits) in the AID12 field and B12 to B39 (28 bits) in the non-association identifier field carry the second frame check sequence, the AID12 field occupies 16 consecutive values of 2000 to 2015, and a binary value of B11 to B4 in the AID12 field is 01111101. In other words, in this manner, the binary value of B11 to B4 in the AID12 field may be set to a special value 01111101, to indicate that the user information field carries the second frame check sequence.

In this implementation, the AP cannot allocate the occupied AID12 values of 2000 to 2006 to any associated station, and no associated station mistakenly considers that a User Info field corresponding to the value corresponds to the station. In addition, in this implementation, the AP cannot use AID12=2007 to indicate a special User Info field. When the AID12 value is 2008 to 2015, 2008 to 2015 are originally reserved values, and may be directly used as special values. Details are not described again.

Optionally, in this implementation, when the binary value of B11 to B4 in the AID12 field is set to the special value 01111101, it may further specifically indicate that in the user information field, B0 to B3 (4 bits) in the AID12 field and B12 to B39 (28 bits) in the non-association identifier field carry the second frame check sequence.

In still another possible implementation, the second frame check sequence occupies 4 bytes, B0 to B3 (4 bits) in the AID12 field and B12 to B39 (28 bits) in the non-association identifier field carry the second frame check sequence, the AID12 field occupies 16 consecutive values of 2032 to 2047, and a binary value of B11 to B4 in the AID12 field is 01111111. In other words, in this manner, the binary value of B11 to B4 in the AID12 field may be set to a special value 01111111, to indicate that the user information field carries the second frame check sequence.

In this implementation, the AP does not support UORA, which prevents an unassociated station from mistakenly considering an RU corresponding to AID12=2045 as being available for UORA. In addition, the AP no longer uses AID 12=2046 to indicate an unallocated RU.

Optionally, in this implementation, when the binary value of B11 to B4 in the AID12 field is set to the special value 01111111, it may further specifically indicate that in the user information field, B0 to B3 (4 bits) in the AID12 field and B12 to B39 (28 bits) in the non-association identifier field carry the second frame check sequence.

In the foregoing scenario in which B0 to B3 (4 bits) in the AID12 field and B12 to B39 (28 bits) in the non-association identifier field carry the second frame check sequence, and the 8 most significant bits (B4 to B11) in the AID12 field are set to a special value to indicate that the user information field carries the second frame check sequence, the communication device (for example, the first communication device) that receives the trigger frame may determine, based on values of B4 to B11 in the user information field, a location of the user information field that carries the second frame check sequence, that is, determine that the user information field is the first user information field. By selecting specific B11 to B4 in the AID12 field, the station may be prevented from misinterpreting the user information field that carries the second frame check sequence.

With reference to the foregoing implementations in this scenario, the B11 field is set to 0, and the B11 bit may be reserved for future use by another function.

For example, FIG. 16 is a diagram of a structure of still another first user information field that carries a second frame check sequence according to an embodiment of this application. As shown in FIG. 16, FCS2 is the second frame check sequence. FCS2 may include two parts: a part 1 (FCS2-part1) and a part 2 (FCS2-part2). The part 1 of FCS2 is carried in a total of 4 bits of B0 to B3 in the AID12 field, and the part 2 of FCS2 is carried in a total of 28 bits of B12 to B39 in the non-AID 12 field. That is, FCS2 is carried in a total of 32 bits of B0 to B3 in the AID12 field and B12 to B39 in the non-AID 12 field. B4 to B11 in the AID12 field are special values. For an implementation of the special value, refer to the foregoing descriptions. B11 may be set to 0.

Certainly, a manner of setting B4 to B11 to special values is not limited in this application. In another possible implementation, special values may be set for B4 to B11 based on a current reserved value of AID12. The special value may also be referred to as a third value. For example, current reserved values of AID12 in a range less than or equal to 2045 include 2008 to 2044. In the range of 2008 to 2044, 01111110 may be selected as a binary value of 8 most significant bits (B11 to B4) in AID12, corresponding to AID12 values of 2016 to 2031. When the value of B11 to B4 in the AID12 field is 01111110, all possible AID12 values are reserved values, and a station does not mistakenly consider that the User Info field corresponds to the station or UORA.

In some other possible scenarios, when the second frame check sequence occupies 4 bytes, and at least 4 bits in the AID12 field are used to carry a part of the second frame check sequence, B8 to B39 (namely, B8 to B11 in the AID12 field and B12 to B39 in the non-association identifier field) may be used to carry the second frame check sequence. 8 least significant bits (B0 to B7) in the AID12 field may be set to a special value, and a STA (receiving station) may identify, based on the special value, that the user information field carries the second frame check sequence.

For example, FIG. 17 is a diagram of a structure of still another first user information field that carries a second frame check sequence according to an embodiment of this application. As shown in FIG. 17, FCS2 is the second frame check sequence. FCS2 may include two parts: a part 1 (FCS2-part1) and a part 2 (FCS2-part2). The part 1 of FCS2 is carried in a total of 4 bits of B8 to B11 in the AID12 field, and the part 2 of FCS2 is carried in a total of 28 bits of B12 to B39 in the non-AID 12 field. That is, FCS2 is carried in a total of 32 bits of B8 to B11 in the AID12 field and B12 to B39 in the non-AID12 field. B0 to B7 in the AID12 field are special values.

It should also be understood that because B0 to B7 are a part of the AID12 field, when B0 to B7 are set to a special value, the selected special value needs to avoid a problem that a legacy (legacy) station identifies the AID12 field as an allocated value and consequently misinterpretation is caused. The following describes some implementations of setting B0 to B7 to a special value in this scenario.

When a total of 4 bits of B8 to B11 in the AID12 field are used to carry a part of the second frame check sequence, 8 least significant bits in AID12 are fixed, which causes occupied AID12 values to be inconsecutive. In this scenario, B8 to B11 have a total of 16 possible values, namely, 0 to 15.

When values of B7 to B0 are 0 (decimal) and values of B11 to B8 are respectively 0 to 15 (decimal), the 16 occupied AID12 values are respectively 0, 256, 512, 768, 1024, 1280, 1536, 1792, 2048, 2304, 2560, 2816, 3072, 3328, 3584, and 3840 (decimal).

When values of B7 to B0 are N (decimal) and values of B10 to B8 are respectively 0 to 7 (decimal), the 16 occupied AID12 values are respectively 0+N, 256+N, 512+N, 768+N, 1024+N, 1280+N, 1536+N, 1792+N, 2048+N, 2304+N, 2560+N, 2816+N, 3072+N, 3328+N, 3584+N, and 3840+N (decimal). Herein, N is an integer greater than or equal to 0.

In some possible implementations, a value of N may be changed, so that first eight occupied AID12 values are distributed in a range of 1 to 2006, and the AP may not allocate the corresponding occupied AID12 value to any associated station. In last eight AID12 values, all values other than 4095 are reserved values, provided that it is ensured that the values are not used for other purposes in the future. The following focuses on describing the first eight AID12 values.

In some other possible implementations, a value of N may be changed, so that a range of first eight occupied AID12 values is expanded. In this case, the first eight occupied AID12 values may conflict with another function originally defined in the standard, and it is necessary not to allow the AP to perform an original function.

In some other possible implementations, the occupied AID12 value may alternatively be currently reserved. Refer to Table 1, for example, 2008 to 2044. This is not limited in this application.

For example, first eight occupied AID12 values are distributed in a range of 1 to 2006, and the AP does not allocate the corresponding occupied AID12 value to any associated station. To avoid occupying AID 12=0, N may be set to be greater than 0. To avoid occupying AID12 values 2007 and above, 1792+N may be set to be less than 2007. That is, N may be an integer in a range greater than 0 and less than 215.

For example, 214 may be selected as N (decimal), and a binary value of B7 to B0 may be correspondingly represented as 11010110. In this case, the first eight occupied AID12 values are respectively 214, 470, 726, 982, 1238, 1494, 1750, and 2006, and the last eight occupied AID12 values are respectively 2262, 2518, 2774, 3030, 3286, 3542, 3798, and 4054. The binary value of B7 to B0 is 110 10 110, which may indicate that the user information field carries the second frame check sequence.

In the foregoing scenario in which B8 to B11 (4 bits) in the AID12 field and B12 to B39 (28 bits) in the non-association identifier field carry the second frame check sequence, and the 8 least significant bits (B7 to B0) in the AID12 field are set to a special value to indicate that the user information field carries the second frame check sequence, the communication device (for example, the first communication device) that receives the trigger frame may determine, based on values of B7 to B0 in the user information field, a location of the user information field that carries the second frame check sequence, that is, determine that the user information field is the first user information field. By selecting specific B7 to B0 in the AID12 field, the station may be prevented from misinterpreting the user information field that carries the second frame check sequence.

Optionally, similar to the foregoing embodiment, in this scenario, when the binary value of B7 to B0 in the AID12 field is set to a special value, it may further specifically indicate that in the user information field, B8 to B11 (4 bits) in the AID12 field and B12 to B39 (28 bits) in the non-association identifier field carry the second frame check sequence.

Different from the foregoing embodiment, in the scenario in which B8 to B11 (4 bits) in the AID12 field and B12 to B39 (28 bits) in the non-association identifier field carry the second frame check sequence, and the 8 least significant bits (B7 to B0) in the AID12 field are set to a special value to indicate that the user information field carries the second frame check sequence, continuity of the second frame check sequence can be implemented.

The foregoing describes a possible implementation solution in which the second frame check sequence occupies 4 bytes when the second frame check sequence is carried in one first user information field.

In another possible design, the second frame check sequence occupies 1 or 2 bytes, and the first user information field includes an association identifier (AID12) field and a non-association identifier field. The second frame check sequence is carried in a bit in the association identifier field and/or a bit in the non-association identifier field.

Optionally, for an implementation in which the second frame check sequence occupies 2 bytes, refer to the "IEEE Std 802.11-2020 standard document", for example, descriptions in "15.3.3.7 (PHY CRC field)". Herein, CRC is cyclic redundancy code (cyclic redundancy code). For an implementation in which the second frame check sequence occupies 1 byte, also refer to the "IEEE Std 802.11-2020 standard document", for example, descriptions in "9.7.2 (MPDU delimiter CRC field)". Herein, MPDU is medium access control protocol data unit (MAC protocol data unit), and delimiter is a separator.

For example, in an implementation, the second frame check sequence occupies 1 or 2 bytes, and the second frame check sequence may be carried in a bit in the non-AID12 field.

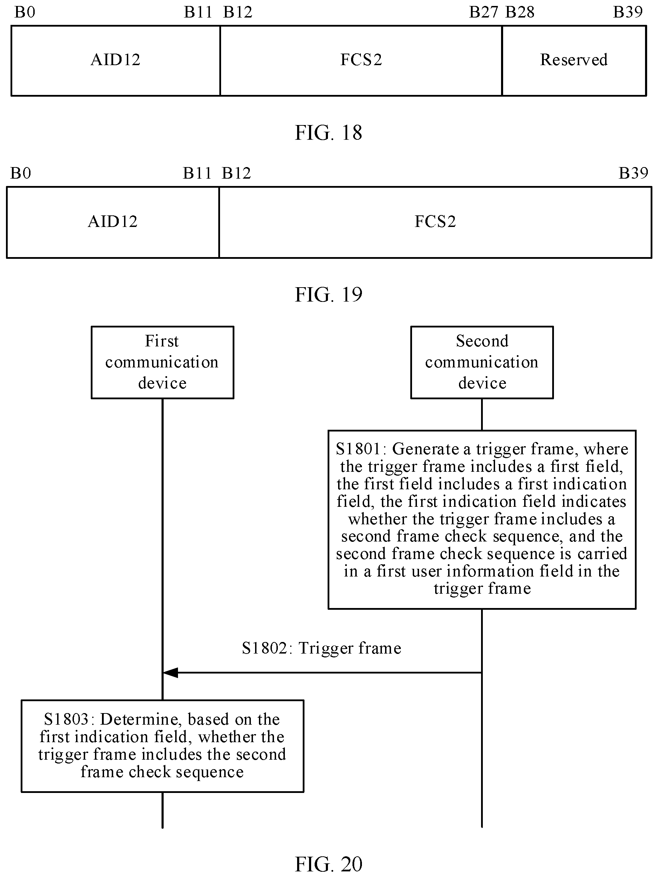

For example, the second frame check sequence is 2 bytes (16 bits). FIG. 18 is a diagram of a structure of still another first user information field that carries a second frame check sequence according to an embodiment of this application. As shown in FIG. 18, FCS2 is the second frame check sequence.

FCS2 is carried in a total of 16 bits of B12 to B27 in the non-AID12 field. B28 to B39 in the non-AID12 field are reserved bits.

Similarly, for a case in which the second frame check sequence is 1 byte (8 bits), refer to FIG. 18. B12 to B19 carry FCS2, and B20 to B39 are reserved bits.

It should be understood that the second frame check sequence may alternatively occupy another bit in the non-AID12 field. The foregoing descriptions are merely an example. This is not limited in this application. When a location of the second frame check sequence is further forward, the communication device (for example, the first communication device) that receives the trigger frame may be enabled to perform frame check by using the second frame check sequence as early as possible.

Optionally, in this implementation, when the second frame check sequence is carried in a bit in the non-association identifier field, the association identifier field is a first value. The first value may be a specific value. For example, the AID12 field may be set to a specific value, for example, a value in 2008 to 2044, to identify that the user information field is the first user information field.

In another implementation, the second frame check sequence occupies 1 byte, and the second frame check sequence may be carried in a bit in the AID12 field.

For example, when the AID12 field occupies 12 bits, and the second frame check sequence occupies a length of 1 byte (8 bits), the second frame check sequence may alternatively be completely carried in the AID12 field.

Optionally, when the second frame check sequence is carried in a bit in the association identifier field, B11 corresponding to the association identifier field is 1, and B0 to B10 corresponding to the association identifier field are not all 1s. A principle is similar to the foregoing implementation in which the second frame check sequence occupies 4 bytes. Details are not described again.

In still another implementation, the second frame check sequence occupies 1 or 2 bytes, and the second frame check sequence may be carried in bits in the AID12 field and the non-AID 12 field.

For example, for an implementation in which the second frame check sequence may be carried in bits in the AID12 field and the non-AID12 field, also refer to the foregoing implementation in which the second frame check sequence occupies 4 bytes. A difference lies in a different length of the second frame check sequence and a different occupied bit.

For example, when the second frame check sequence occupies 2 bytes, the part 2 of the second frame check sequence in FIG. 12 to FIG. 15 may be shortened, so that the length of the second frame check sequence is 2 bytes, and the second frame check sequence may be carried. For example, the part 1 of FCS2 is carried in a total of 4 bits of B0 to B3 in the AID12 field, and the part 2 of FCS2 is carried in a total of 12 bits of B12 to B23 in the non-AID12 field.

Alternatively, when the second frame check sequence occupies 1 byte, the part 2 of the second frame check sequence in FIG. 12 or FIG. 14 may be shortened, so that the length of the second frame check sequence is 1 byte, and the second frame check sequence may be carried.

Alternatively, when the second frame check sequence occupies 1 byte, both the part 1 and the part 2 of the second frame check sequence in FIG. 13 or FIG. 15 may be shortened, so that the length of the second frame check sequence is 1 byte, and the second frame check sequence may be carried.

In this application, the second frame check sequence occupies 1 or 2 bytes, and bit locations occupied in the AID12 field and the non-AID12 field are not limited.

Optionally, when the second frame check sequence is carried in bits in the association identifier field and the non-association identifier field, B11 corresponding to the association identifier field is 1, and B0 to B10 corresponding to the association identifier field are not all 1s. A principle is similar to the foregoing implementation in which the second frame check sequence occupies 4 bytes. Details are not described again.

In still another possible design, the second frame check sequence occupies 28 bits, and the first user information field includes an association identifier (AID12) field and a non-association identifier field. The second frame check sequence is carried in a bit in the non-association identifier field.

For example, FIG. 19 is a diagram of a structure of still another first user information field that carries a second frame check sequence according to an embodiment of this application. As shown in FIG. 19, FCS2 is the second frame check sequence.

FCS2 is carried in a total of 28 bits of B12 to B39 in the non-AID12 field.

Optionally, in this design, the association identifier field is a second value. The second value may be a specific value. For example, the AID12 field may be set to a specific value, for example, a value in 2008 to 2044, to identify that the user information field is the first user information field.

Optionally, in this design, the second frame check sequence that occupies 28 bits may be obtained by intercepting a frame check sequence that occupies 4 bytes. For example, 28 most significant bits or 28 least significant bits of the frame check sequence that occupies 4 bytes may be intercepted to obtain the second frame check sequence. A manner of generating the second frame check sequence is not limited in this application.

In some possible scenarios, the embodiment in which the second frame check sequence is carried in one first user information field in the foregoing embodiments may alternatively be implemented based on the foregoing embodiment in which the location of the second frame check sequence is indicated by using the first indication field in the trigger frame. Alternatively, the two embodiments may be implemented in combination.

For example, in the foregoing embodiment in which the location of the second frame check sequence is indicated by using the first indication field in the trigger frame, the second frame check sequence is carried in one first user information field.

Optionally, the second frame check sequence occupies 4 bytes, occupies 1 or 2 bytes, or occupies 28 bits. For a location and a manner of carrying the second frame check sequence, refer to the descriptions in the foregoing embodiment in which the second frame check sequence is carried in one first user information field. Details are not described again.

Optionally, in some other embodiments of this application, whether the second frame check sequence exists may be indicated in the trigger frame, and the location of the second frame check sequence is not indicated. For example, an embodiment of this application further provides a communication method. In the communication method, a second communication device may send a trigger frame to a first communication device, where the trigger frame includes a first field, the first field includes a first indication field, the first indication field indicates whether the trigger frame includes a second frame check sequence, and the second frame check sequence is carried in a first user information field in the trigger frame.

For example, FIG. 20 is still another schematic flowchart of a communication method according to an embodiment of this application. As shown in FIG. 20, the communication method may include S1801 to S1803.

In the procedure shown in FIG. 20, steps performed by a first communication device may be specifically performed by the first communication device or an apparatus (for example, a chip) built in the first communication device, and steps performed by a second communication device may be specifically performed by the second communication device or an apparatus (for example, a chip) built in the second communication device.

S1801: The second communication device generates a trigger frame, where the trigger frame includes a first field, the first field includes a first indication field, the first indication field indicates whether the trigger frame includes a second frame check sequence, and the second frame check sequence is carried in a first user information field in the trigger frame.

Optionally, the trigger frame may be of a multi-user request to send (multi-user request to send, MU-RTS) type, may be of a broadcast storm recovery protocol (broadcast storm recovery protocol, BSRP) type, or may be of another type. A type of the trigger frame is not limited in this application, and only the MU-RTS type is used as an example for description.

S1802: The second communication device sends the trigger frame.

Correspondingly, the first communication device may receive the trigger frame.

For S1801 and S1802, refer to the foregoing descriptions of S401 and S402. Same parts are not described again. A difference lies in that in this embodiment, the trigger frame may include the first field. The first field includes the first indication field, and the first indication field may indicate whether the trigger frame includes the second frame check sequence. When the trigger frame includes the second frame check sequence, the second frame check sequence is carried in the first user information field in the trigger frame. After receiving the trigger frame, the first communication device may determine, based on the first indication field, whether the trigger frame includes the second frame check sequence. The second frame check sequence may be FCS2 described above. For example, the first communication device may perform S1803.

S1803: The first communication device determines, based on the first indication field, whether the trigger frame includes the second frame check sequence.

For example, in this embodiment, a scenario in which the second communication device sends the trigger frame to the first communication device may include: The second communication device expects the first communication device to send and receive data by using a larger capability after exiting a listening state, or the second communication device expects the first communication device to reserve a channel. When the second communication device expects the first communication device to send and receive data by using a larger capability after exiting the listening state, the second communication device may send a trigger frame serving as an initial control frame to the first communication device. After completing state switching, the first communication device may reply with an initial control response frame to the second communication device. When the second communication device expects the first communication device to reserve a channel, the second communication device may send a common trigger frame to the first communication device, to indicate the first communication device to reserve a channel.

The common trigger frame does not include the second frame check sequence. The trigger frame serving as the initial control frame includes the second frame check sequence. The first communication device may determine, based on the first indication field included in the trigger frame, whether the trigger frame includes the second frame check sequence. When the first indication field indicates that the trigger frame includes the second frame check sequence, the first communication device may perform state switching. When the first indication field indicates that the trigger frame does not include the second frame check sequence, the first communication device may reserve a channel.

Optionally, in this embodiment, for a structure of the trigger frame, refer to the descriptions in the foregoing embodiment. Details are not described again.

Similar to the foregoing embodiment, the first field may be a common information field or a special user information field.

Optionally, the first indication field may occupy one or more bits in the first field, indicating whether the trigger frame includes the second frame check sequence. For example, when a value of the bit occupied by the first indication field is 0, it indicates that the trigger frame does not include the second frame check sequence; or when a value of the bit occupied by the first indication field is not 0, for example, is 1, it indicates that the trigger frame includes the second frame check sequence.

For example, the bit occupied by the first indication field may be at least one of B4 to B15, B22 to B53, and B63 in the common information field, or may be at least one of B37 to B39 in the special user information field.

In this embodiment, when learning, based on the first indication field, that the trigger frame does not include the second frame check sequence, a communication device (for example, the first communication device) that receives the trigger frame may no longer analyze a subsequent User Info field after AID12 is a User Info field that matches the communication device, thereby effectively reducing power consumption. In addition, the first indication field indicates only whether the trigger frame includes the second frame check sequence, thereby effectively reducing signaling overheads.

Optionally, in this embodiment, the second frame check sequence may be carried in two user information fields, as described in the foregoing embodiment, or may be carried in one user information field with reference to the foregoing embodiment in which the second frame check sequence is carried in one first user information field. This is not limited herein.

Based on the descriptions in the foregoing embodiments, embodiments of this application actually separately provide a method that can be applied to the first communication device and a method that can be applied to the second communication device. For the method applied to the first communication device, refer to the steps performed by the first communication device in the foregoing embodiments. For the method applied to the second communication device, refer to the steps performed by the second communication device in the foregoing embodiments.

The foregoing mainly describes the solutions provided in embodiments of this application from a perspective of interaction between network elements. It may be understood that to implement the foregoing functions, each network element such as the first communication device or the second communication device includes corresponding hardware structures and/or software modules for performing the functions.

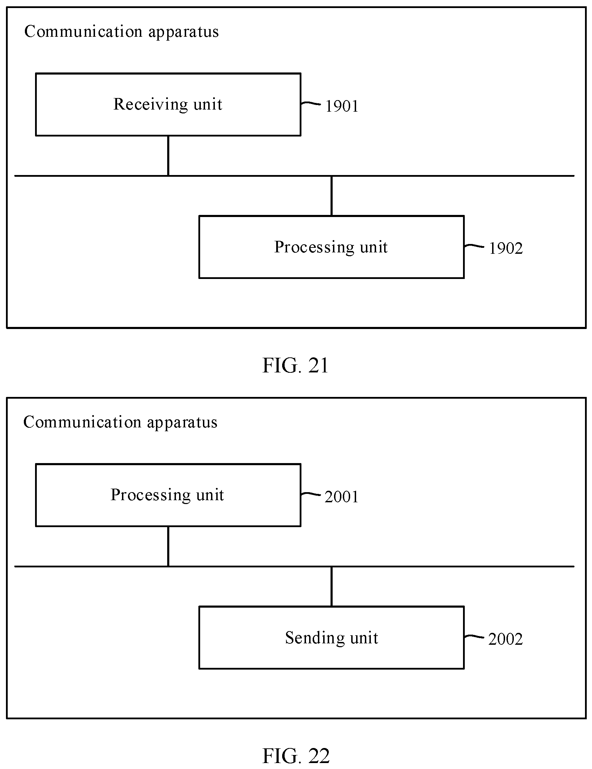

For example, an embodiment of this application may provide a communication apparatus configured to implement a function of the first communication device. The communication apparatus may be the first communication device, or may be an apparatus (for example, a chip) built in the first communication device. FIG. 21 is a diagram of a structure of a communication apparatus according to an embodiment of this application. As shown in FIG. 21, the communication apparatus may include a receiving unit 1901 and a processing unit 1902.

The receiving unit 1901 is configured to receive a trigger frame, where the trigger frame includes a first field and a first user information field that carries a second frame check sequence, the first field includes a first indication field, and the first indication field indicates a location of the second frame check sequence.

The processing unit 1902 is configured to determine the location of the second frame check sequence based on the first indication field.

Optionally, the communication apparatus further includes a sending unit, configured to send data, for example, send an initial control response frame.

For another example, an embodiment of this application may provide a communication apparatus configured to implement a function of the second communication device. The communication apparatus may be the second communication device, or may be an apparatus (for example, a chip) built in the second communication device. FIG. 22 is a diagram of a structure of a communication apparatus according to an embodiment of this application. As shown in FIG. 22, the communication apparatus may include a processing unit 2001 and a sending unit 2002.

The processing unit 2001 is configured to generate a trigger frame, where the trigger frame includes a first field and a first user information field that carries a second frame check sequence, the first field includes a first indication field, and the first indication field indicates a location of the second frame check sequence.

The sending unit 2002 is configured to send the trigger frame.

Optionally, the communication apparatus further includes a receiving unit, configured to receive data, for example, receive an initial control response frame.

Optionally, in the embodiments shown in FIG. 21 and FIG. 22, the first user information field is not at the end of the trigger frame.

In a possible design, the trigger frame further includes a padding field and a first frame check sequence, the first user information field is before the padding field, and the first frame check sequence is after the padding field.

In a possible design, that the first indication field indicates the location of the second frame check sequence includes: the first indication field indicates a location of the first user information field.

In an implementation, that the first indication field indicates the location of the first user information field includes: a value of the first indication field is n, indicating that the first user information field is an (n+1)^{th} user information field after the first field. Optionally, n is an integer greater than or equal to 0.

In another implementation, that the first indication field indicates the location of the first user information field includes: the first field is a common information field, and a value of the first indication field is n, indicating that the first user information field is an (n+1)^{th} user information field after a special user information field, where the special user information field is after the common information field. Optionally, the special user information field is adjacent to the common information field. Optionally, n is an integer greater than or equal to 0.

In still another implementation, that the first indication field indicates the location of the first user information field includes: the first field is a special user information field, and a value of the first indication field is n, indicating that the first user information field is an (n+1)^{th} user information field after a common information field, where the special user information field is after the common information field. Optionally, n is an integer greater than or equal to 0.

In another possible design, the first indication field may specifically indicate a length of the padding field, and the length of the padding field is used to determine the location of the second frame check sequence.

In still another possible design, the first indication field specifically indicates the number of bytes between the end of the first field and the second frame check sequence, and the number of bytes is used to determine the location of the second frame check sequence. Alternatively, the first indication field specifically indicates the number of bytes occupied by a user information field before the first user information field, and the number of bytes is used to determine the location of the second frame check sequence. Alternatively, the first indication field specifically indicates the number of bytes occupied by a user information field and a common information field that are before the first user information field, and the number of bytes is used to determine the location of the second frame check sequence. Alternatively, the first indication field specifically indicates the number of bytes occupied by a field between the second frame check sequence and the first frame check sequence, and the number of bytes is used to determine the location of the second frame check sequence. Alternatively, the first indication field specifically indicates the number of bytes occupied by a field between the first user information field and the first frame check sequence, and the number of bytes is used to determine the location of the second frame check sequence.

In a possible scenario, the length of the padding field is 0.

In a possible design, the first field is a common information field or a special user information field.

Optionally, the first field is a common information field, and the first indication field is carried in at least one of B4 to B15, B22 to B53, and B63 in the common information field. Alternatively, the first field is a special user information field, and the first indication field is carried in at least one of B37 to B39 in the special user information field.

In some possible scenarios, the second frame check sequence is carried in one first user information field.

In a possible design, the second frame check sequence occupies 4 bytes, and the first user information field includes an association identifier (AID12) field and a non-association identifier field. The second frame check sequence is carried in bits in the association identifier field and the non-association identifier field, and the second frame check sequence occupies at least 4 bits in the association identifier field.

In some possible scenarios of this design, B11 in the association identifier field is 1, and B0 to B10 in the association identifier field are not all 1s.

In an implementation, B0 to B3 in the association identifier field and B12 to B39 in the non-association identifier field carry the second frame check sequence. In the association identifier field, B4 to B10 are non-all-ones values, and B11 is 1.

In another implementation, B0 to B9 in the association identifier field and B12 to B33 in the non-association identifier field carry the second frame check sequence. In the association identifier field, B10 is 0, and B11 is 1.

In still another implementation, B0 to B3 in the association identifier field and B12 to B39 in the non-association identifier field carry the second frame check sequence. In the association identifier field, B10 is 0, and B11 is 1.

In a possible implementation, B0 to B10 in the association identifier field and B12 to B32 in the non-association identifier field carry the second frame check sequence. B11 in the association identifier field is 1.

In another possible design, the second frame check sequence occupies 1 or 2 bytes, and the first user information field includes an association identifier (AID12) field and a non-association identifier field. The second frame check sequence is carried in a bit in the association identifier field and/or a bit in the non-association identifier field.

Optionally, when the second frame check sequence is carried in a bit in the non-association identifier field, the association identifier field is a first value.

Optionally, when the second frame check sequence is carried in a bit in the association identifier field or carried in bits in the association identifier field and the non-association identifier field, B11 corresponding to the association identifier field is 1, and B0 to B10 corresponding to the association identifier field are not all 1s.

In still another possible design, the second frame check sequence occupies 28 bits, and the first user information field includes an association identifier (AID12) field and a non-association identifier field. The second frame check sequence is carried in a bit in the non-association identifier field.

Optionally, in this design, the association identifier field is a second value. The second value may be a specific value.

For another example, an embodiment of this application may provide a communication apparatus configured to implement a function of the first communication device. The communication apparatus may be the first communication device, or may be an apparatus (for example, a chip) built in the first communication device. For a structure of the apparatus, refer to FIG. 21. For example, a receiving unit and a processing unit are included.

The receiving unit is configured to receive a trigger frame, where the trigger frame includes a first user information field that carries a second frame check sequence, the second frame check sequence is used to check content before the second frame check sequence in the trigger frame, and the second frame check sequence is carried in one first user information field. The processing unit is configured to check the content before the second frame check sequence in the trigger frame based on the second frame check sequence.

Optionally, the communication apparatus further includes a sending unit, configured to send data, for example, send an initial control response frame.

For another example, an embodiment of this application may provide a communication apparatus configured to implement a function of the second communication device. The communication apparatus may be the second communication device, or may be an apparatus (for example, a chip) built in the second communication device. For a structure of the apparatus, refer to FIG. 22. For example, a processing unit and a sending unit are included.

The processing unit is configured to generate a trigger frame, where the trigger frame includes a first user information field that carries a second frame check sequence, the second frame check sequence is used to check content before the second frame check sequence in the trigger frame, and the second frame check sequence is carried in one first user information field. The sending unit is configured to send the trigger frame.

Optionally, the communication apparatus further includes a receiving unit, configured to receive data, for example, receive an initial control response frame.

In an embodiment in which the second frame check sequence is carried in one first user information field, in a possible design, the second frame check sequence occupies 4 bytes, and the first user information field includes an association identifier (AID12) field and a non-association identifier field. The second frame check sequence is carried in bits in the association identifier field and the non-association identifier field, and the second frame check sequence occupies at least 4 bits in the association identifier field.

In some possible scenarios of this design, B11 in the association identifier field is 1, and B0 to B10 in the association identifier field are not all 1s.

In an implementation, B0 to B3 in the association identifier field and B12 to B39 in the non-association identifier field carry the second frame check sequence. In the association identifier field, B4 to B10 are non-all-ones values, and B11 is 1.

Optionally, in this implementation, B4 to B10 in the AID12 field may be specific non-all-ones values.

In another implementation, B0 to B9 in the association identifier field and B12 to B33 in the non-association identifier field carry the second frame check sequence. In the association identifier field, B10 is 0, and B11 is 1.

In still another implementation, B0 to B3 in the association identifier field and B12 to B39 in the non-association identifier field carry the second frame check sequence. In the association identifier field, B10 is 0, and B11 is 1.

Optionally, in this implementation, B4 to B9 in the AID12 field may alternatively be set to specific values or any values. This is not limited herein.

In a possible implementation, B0 to B10 in the association identifier field and B12 to B32 in the non-association identifier field carry the second frame check sequence. B11 in the association identifier field is 1.

Optionally, in this implementation, the trigger frame further includes a first field, the first field includes a first indication field, and the first indication field indicates a location of the second frame check sequence. In the communication apparatus used in the first communication device, the processing unit is further configured to determine the location of the second frame check sequence based on the first indication field.

In another possible design, the second frame check sequence occupies 1 or 2 bytes, and the first user information field includes an association identifier (AID12) field and a non-association identifier field. The second frame check sequence is carried in a bit in the association identifier field and/or a bit in the non-association identifier field.

Optionally, when the second frame check sequence is carried in a bit in the non-association identifier field, the association identifier field is a first value.

Optionally, when the second frame check sequence is carried in a bit in the association identifier field or carried in bits in the association identifier field and the non-association identifier field, B11 corresponding to the association identifier field is 1, and B0 to B10 corresponding to the association identifier field are not all 1s.

In still another possible design, the second frame check sequence occupies 28 bits, and the first user information field includes an association identifier (AID12) field and a non-association identifier field. The second frame check sequence is carried in a bit in the non-association identifier field.

Optionally, in this design, the association identifier field is a second value. The second value may be a specific value.

For another example, an embodiment of this application may provide a communication apparatus configured to implement a function of the first communication device. The communication apparatus may be the first communication device, or may be an apparatus (for example, a chip) built in the first communication device. For a structure of the apparatus, refer to FIG. 21. For example, a receiving unit and a processing unit are included.

The receiving unit is configured to receive a trigger frame, where the trigger frame includes a first field, the first field includes a first indication field, the first indication field indicates whether the trigger frame includes a second frame check sequence, and the second frame check sequence is carried in a first user information field in the trigger frame. The processing unit is configured to determine, based on the first indication field, whether the trigger frame includes the second frame check sequence.

Optionally, the communication apparatus further includes a sending unit, configured to send data, for example, send an initial control response frame.

For another example, an embodiment of this application may provide a communication apparatus configured to implement a function of the second communication device. The communication apparatus may be the second communication device, or may be an apparatus (for example, a chip) built in the second communication device. For a structure of the apparatus, refer to FIG. 22. For example, a processing unit and a sending unit are included.

The processing unit is configured to generate a trigger frame, where the trigger frame includes a first user information field that carries a second frame check sequence, the second frame check sequence is used to check content before the second frame check sequence in the trigger frame, and the second frame check sequence is carried in one first user information field. The sending unit is configured to send the trigger frame, where the trigger frame includes a first field, the first field includes a first indication field, the first indication field indicates whether the trigger frame includes the second frame check sequence, and the second frame check sequence is carried in the first user information field in the trigger frame.

Optionally, the communication apparatus further includes a receiving unit, configured to receive data, for example, receive an initial control response frame.

In an embodiment in which the first indication field indicates whether the trigger frame includes the second frame check sequence, for a structure of the trigger frame, refer to the descriptions in the foregoing method embodiment. Details are not described again.

Optionally, the first field may be a common information field or a special user information field.

Optionally, the first indication field may occupy one or more bits in the first field, indicating whether the trigger frame includes the second frame check sequence. For example, when a value of the bit occupied by the first indication field is 0, it indicates that the trigger frame does not include the second frame check sequence; or when a value of the bit occupied by the first indication field is not 0, for example, is 1, it indicates that the trigger frame includes the second frame check sequence.

Optionally, the second frame check sequence may be carried in two user information fields, or may be carried in one user information field. This is not limited herein.

It should be understood that division into the units in the apparatus is merely logical function division. In an actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit with a signal processing capability. In an implementation process, the steps in the foregoing methods or the foregoing units may be implemented by using an integrated logic circuit of hardware in a processor element, or may be implemented in a form of software invoked by a processing element.

In an example, the unit in any one of the foregoing apparatuses may be one or more integrated circuits configured to implement the foregoing methods, for example, one or more application-specific integrated circuits (application-specific integrated circuits, ASICs), one or more digital signal processing (digital signal processing, DSP) circuits, one or more field programmable gate arrays (field programmable gate arrays, FPGAs), or a combination of at least two of these integrated circuit forms.

For another example, when the unit in the apparatus may be implemented by a processing element by scheduling a program, the processing element may be a general-purpose processor, for example, a CPU or another processor that can invoke a program. For another example, the units may be integrated and implemented in a form of a system-on-a-chip (system-on-a-chip, SoC).

The foregoing receiving unit is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the communication apparatus includes a sending unit, the sending unit is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a communication apparatus. The communication apparatus may include a processor and an interface circuit. There may be one or more processors.

When the communication apparatus is used in the first communication device, the processor is configured to: communicate with another apparatus through the interface circuit, and perform the steps performed by the first communication device in the foregoing methods.

When the communication apparatus is used in the second communication device, the processor is configured to: communicate with another apparatus through the interface circuit, and perform the steps performed by the second communication device in the foregoing methods.

In an implementation, units used by the first communication device or the second communication device to respectively implement the corresponding steps in the foregoing methods may be implemented by a processing element by scheduling a program. For example, the apparatus used in the first communication device or the second communication device may include a processing element and a storage element. The processing element invokes a program stored in the storage element, to perform the corresponding method performed by the first communication device or the second communication device in the foregoing method embodiments. The storage element may be a storage element located on a same chip as the processing element, that is, an on-chip storage element.

In another implementation, the program used to perform the method performed by the first communication device or the second communication device in the foregoing methods may be in a storage element located on a different chip from the processing element, that is, an off-chip storage element. In this case, the processing element invokes the program from the off-chip storage element or loads the program into an on-chip storage element, to invoke and perform the corresponding method performed by the first communication device or the second communication device in the foregoing method embodiments.

For example, an embodiment of this application may further provide a communication apparatus. The communication apparatus may include a processor, configured to execute computer instructions stored in a memory. When the computer instructions are executed, the apparatus is enabled to perform the method performed by the first communication device or the second communication device. The memory may be located inside the communication apparatus, or may be located outside the communication apparatus. In addition, there are one or more processors.

In still another implementation, the units used by the first communication device or the second communication device to implement the steps in the foregoing methods may be configured as one or more processing elements. These processing elements may be correspondingly disposed on the first communication device or the second communication device. The processing element herein may be an integrated circuit, for example, one or more ASICs, one or more DSPs, one or more FPGAs, or a combination of these integrated circuits. These integrated circuits may be integrated together to form a chip.

The units used by the first communication device or the second communication device to implement the steps in the foregoing methods may be integrated together, and implemented in a form of an SoC. The SoC chip is configured to implement the corresponding method. At least one processing element and storage element may be integrated into the chip, and the processing element invokes a program stored in the storage element to implement the corresponding method. Alternatively, at least one integrated circuit may be integrated into the chip, to implement the corresponding method. Alternatively, with reference to the foregoing implementations, functions of some units may be implemented by the processing element by invoking a program, and functions of some units may be implemented by the integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of these integrated circuits.

The storage element may be one memory, or may be a collective term for a plurality of storage elements.

For example, an embodiment of this application further provides a chip system. The chip system may be used in the foregoing first communication device or second communication device. The chip system includes one or more interface circuits and one or more processors. The interface circuit and the processor are interconnected through a line. The processor receives computer instructions from a memory of an electronic device through the interface circuit and executes the computer instructions, to implement the corresponding method performed by the first communication device or the second communication device in the foregoing method embodiments. The electronic device may be the first communication device or the second communication device, a device in the first communication device or the second communication device, or another device that communicates with the first communication device or the second communication device.

Based on the foregoing descriptions of the implementations, a person skilled in the art may clearly understand that for convenient and brief description, division into the functional modules is merely used as an example for description. In actual application, the foregoing functions may be allocated to and completed by different functional modules based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, division into the modules or the units is merely logical function division. In an actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, may be located at one position, or may be distributed at a plurality of different positions. A part or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product, for example, a program. The software product is stored in a program product, for example, a computer-readable storage medium, and includes several instructions for enabling a device (which may be a single-chip microcomputer, a chip, or the like) or a processor (processor) to perform all or a part of the steps in the methods in embodiments of this application. The storage medium includes any medium that can store program code, for example, a USB flash drive, a removable hard disk, a ROM, a RAM, a magnetic disk, or an optical disc.

For example, an embodiment of this application may further provide a computer-readable storage medium, including computer software instructions. When the computer software instructions are run, the steps performed by the first communication device or the second communication device in the methods in the foregoing embodiments are implemented.

For example, when the computer software instructions are run in a first communication device or an apparatus (for example, a chip) built in a first communication device, the first communication device is enabled to implement the steps performed by the first communication device in the foregoing embodiments.

Alternatively, when the computer software instructions are run in a second communication device or an apparatus (for example, a chip) built in a second communication device, the second communication device is enabled to implement the steps performed by the second communication device in the foregoing embodiments.

Optionally, an embodiment of this application further provides a communication apparatus. The communication apparatus may include a transceiver unit and a processing unit. The transceiver unit may be configured to send and receive information, or configured to communicate with another network element. The processing unit may be configured to process data. For example, the apparatus may implement, through the transceiver unit and the processing unit, the method performed by the first communication device or the second communication device.

Optionally, an embodiment of this application further provides a computer program product. When the computer program product is executed, the method performed by the first communication device or the second communication device may be implemented.

Based on the foregoing embodiments, an embodiment of this application further provides a communication system, including a first communication device and a second communication device. The first communication device performs the steps performed by the first communication device in the methods in the foregoing embodiments. The second communication device performs the steps performed by the second communication device in the methods in the foregoing embodiments.

For example, an embodiment of this application further provides a communication device. The communication device may be configured to implement the method performed by the first communication device or the second communication device in the foregoing embodiments.

It should be understood that descriptions of technical features, technical solutions, beneficial effects, or similar languages in this application do not imply that all features and advantages can be implemented in any single embodiment. On the contrary, it may be understood that the descriptions of the features or beneficial effects mean that at least one embodiment includes specific technical features, technical solutions, or beneficial effects. Therefore, the descriptions of the technical features, the technical solutions, or the beneficial effects in this specification may not necessarily be specific to a same embodiment. Further, the technical features, the technical solutions, and the beneficial effects described in embodiments may be combined in any proper manner. A person skilled in the art may understand that an embodiment may be implemented without one or more specific technical features or technical solutions, or beneficial effects in the specific embodiment. In other embodiments, additional technical features and beneficial effects may be identified in a specific embodiment that does not reflect all embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
receiving a trigger frame, wherein the trigger frame comprises a first field and a first user information field that carries a second frame check sequence, the first field comprises a first indication field, and the first indication field indicates a location of the second frame check sequence; and
determining the location of the second frame check sequence based on the first indication field.

2. A communication method, wherein the method comprises:
generating a trigger frame, wherein the trigger frame comprises a first field and a first user information field that carries a second frame check sequence, the first field comprises a first indication field, and the first indication field indicates a location of the second frame check sequence; and
sending the trigger frame.

3. The method according to claim 1 or 2, wherein the first user information field is not at the end of the trigger frame.

4. The method according to claim 3, wherein the trigger frame further comprises a padding field and a first frame check sequence, the first user information field is before the padding field, and the first frame check sequence is after the padding field.

5. The method according to any one of claims 1 to 4, wherein that the first indication field indicates the location of the second frame check sequence comprises:
the first indication field indicates a location of the first user information field.

6. The method according to claim 5, wherein that the first indication field indicates the location of the first user information field comprises:
a value of the first indication field is n, indicating that the first user information field is an (n+1)^{th} user information field after the first field.

7. The method according to claim 6, wherein the first field is a common information field or a special user information field.

8. The method according to claim 5, wherein that the first indication field indicates the location of the first user information field comprises:
the first field is a common information field, and a value of the first indication field is n, indicating that the first user information field is an (n+1)^{th} user information field after a special user information field, wherein the special user information field is after the common information field.

9. The method according to claim 5, wherein that the first indication field indicates the location of the first user information field comprises:
the first field is a special user information field, and a value of the first indication field is n, indicating that the first user information field is an (n+1)^{th} user information field after a common information field, wherein the special user information field is after the common information field.

10. The method according to claim 4, wherein the first indication field specifically indicates a length of the padding field, and the length of the padding field is used to determine the location of the second frame check sequence.

11. The method according to any one of claims 1 to 4, wherein the first indication field specifically indicates the number of bytes between the end of the first field and the second frame check sequence, and the number of bytes is used to determine the location of the second frame check sequence;
the first indication field specifically indicates the number of bytes occupied by a user information field before the first user information field, and the number of bytes is used to determine the location of the second frame check sequence;
the first indication field specifically indicates the number of bytes occupied by a user information field and a common information field that are before the first user information field, and the number of bytes is used to determine the location of the second frame check sequence;
the first indication field specifically indicates the number of bytes occupied by a field between the second frame check sequence and the first frame check sequence, and the number of bytes is used to determine the location of the second frame check sequence; or
the first indication field specifically indicates the number of bytes occupied by a field between the first user information field and the first frame check sequence, and the number of bytes is used to determine the location of the second frame check sequence.

12. The method according to claim 4 or 10, wherein the length of the padding field is 0.

13. The method according to any one of claims 1 to 12, wherein the first field is a common information field, and the first indication field is carried in at least one of B4 to B15, B22 to B53, and B63 in the common information field; or
the first field is a special user information field, and the first indication field is carried in at least one of B37 to B39 in the special user information field.

14. The method according to any one of claims 1 to 13, wherein the second frame check sequence is carried in one first user information field.

15. The method according to claim 14, wherein the second frame check sequence occupies 4 bytes, and the first user information field comprises an association identifier field and a non-association identifier field; and
the second frame check sequence is carried in bits in the association identifier field and the non-association identifier field, and the second frame check sequence occupies at least 4 bits in the association identifier field.

16. The method according to claim 15, wherein B11 in the association identifier field is 1, and B0 to B10 in the association identifier field are not all 1s.

17. The method according to claim 16, wherein B0 to B3 in the association identifier field and B12 to B39 in the non-association identifier field carry the second frame check sequence; and
B4 to B10 in the association identifier field are non-all-ones values.

18. The method according to claim 16, wherein B0 to B9 in the association identifier field and B12 to B33 in the non-association identifier field carry the second frame check sequence; and
B10 in the association identifier field is 0.

19. The method according to claim 16, wherein B0 to B3 in the association identifier field and B12 to B39 in the non-association identifier field carry the second frame check sequence; and
B10 in the association identifier field is 0.

20. The method according to claim 15, wherein B0 to B10 in the association identifier field and B12 to B32 in the non-association identifier field carry the second frame check sequence; and
B11 in the association identifier field is 1.

21. The method according to claim 14, wherein the second frame check sequence occupies 1 or 2 bytes, and the first user information field comprises an association identifier field and a non-association identifier field; and
the second frame check sequence is carried in a bit in the association identifier field and/or a bit in the non-association identifier field.

22. The method according to claim 21, wherein when the second frame check sequence is carried in a bit in the non-association identifier field, the association identifier field is a first value.

23. The method according to claim 21, wherein when the second frame check sequence is carried in a bit in the association identifier field or carried in bits in the association identifier field and the non-association identifier field, B11 corresponding to the association identifier field is 1, and B0 to B10 corresponding to the association identifier field are not all 1s.

24. The method according to claim 14, wherein the second frame check sequence occupies 28 bits, and the first user information field comprises an association identifier field and a non-association identifier field; and
the second frame check sequence is carried in a bit in the non-association identifier field.

25. The method according to claim 24, wherein the association identifier field is a second value.

26. A communication apparatus, wherein the communication apparatus comprises a module configured to perform the method according to any one of claims 1 to 25.

27. A communication apparatus, wherein the apparatus comprises a processor, configured to perform the method according to any one of claims 1 to 25.

28. A computer-readable storage medium, wherein the computer-readable storage medium comprises instructions, and when the instructions are run, the method according to any one of claims 1 to 25 is implemented.

29. A computer program product, wherein when the computer program product is executed, the method according to any one of claims 1 to 25 is implemented.

30. A chip system, wherein the chip system comprises one or more interface circuits and one or more processors;
the interface circuit and the processor are interconnected through a line; and
the processor receives computer instructions from a memory of an electronic device through the interface circuit and executes the computer instructions, to implement the method according to any one of claims 1 to 25.

31. A communication system, comprising a first communication device and a second communication device, wherein
the first communication device performs the method according to any one of claim 1 or claims 3 to 25; and
the second communication device performs the method according to any one of claim 2 or claims 3 to 25.
